(19) Europäisches Patentamt
European Patent Office
Office européen des brevets

(11) EP 4 006 095 A1

(12) **EUROPEAN PATENT APPLICATION**
published in accordance with Art. 153(4) EPC

(43) Date of publication:
**01.06.2022 Bulletin 2022/22**

(21) Application number: **20846649.0**

(22) Date of filing: **16.07.2020**

(51) International Patent Classification (IPC):
***C08K 7/18** (2006.01)* ***C08L 101/12** (2006.01)*

(52) Cooperative Patent Classification (CPC):
**C08K 7/18; C08L 101/12**

(86) International application number:
**PCT/JP2020/027682**

(87) International publication number:
**WO 2021/020148 (04.02.2021 Gazette 2021/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2019 JP 2019139942**

(71) Applicant: **Mitsubishi Engineering-Plastics Corporation**
**Tokyo 105-0021 (JP)**

(72) Inventors:
- **OGAWA, Yasushi**
  **Hiratsuka-shi, Kanagawa 254-0016 (JP)**
- **KUSUMOTO, Nobuhiko**
  **Hiratsuka-shi, Kanagawa 254-0016 (JP)**
- **IRIE, Yasuyuki**
  **Hiratsuka-shi, Kanagawa 254-0016 (JP)**

(74) Representative: **Müller-Boré & Partner Patentanwälte PartG mbB**
**Friedenheimer Brücke 21**
**80639 München (DE)**

# (54) THERMOPLASTIC RESIN COMPOSITION AND MOLDED BODY

(57) A thermoplastic resin composition comprising 0.0001 to 0.09 parts by mass of spherical fine particles (B) having an average particle diameter of 500 to 2500 nm relative to 100 parts by mass of a transparent thermoplastic resin (A).

[Fig. 1]

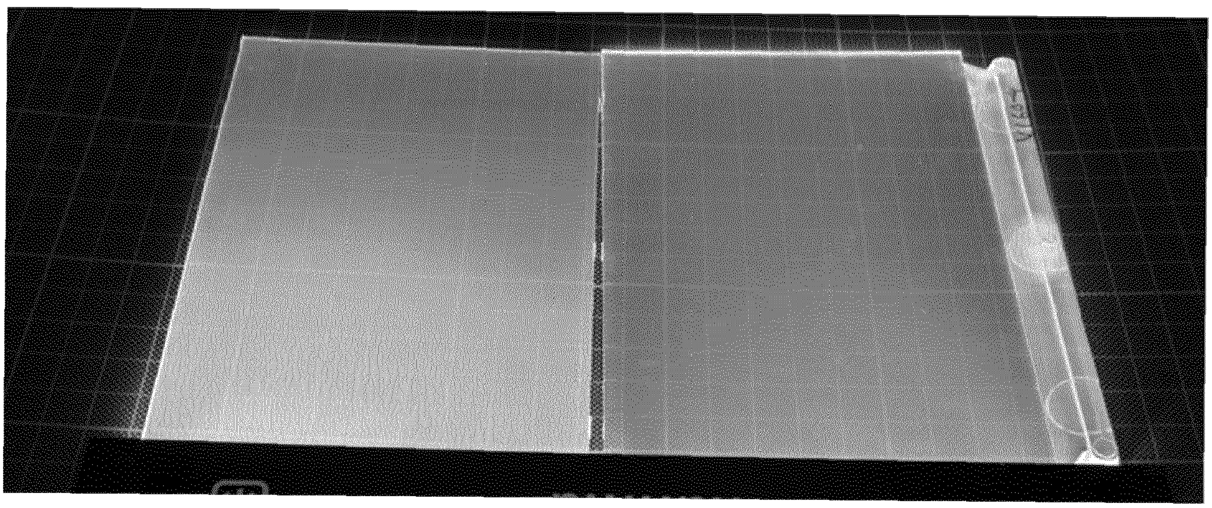



Processed by Luminess, 75001 PARIS (FR)

## Description

[Technical Field]

The present invention relates to a thermoplastic resin composition and a molded article, and more specifically relates to a thermoplastic resin able to yield a molded article which eliminates scattering wavelength selectivity of incident light and which can reduce surface luminescence color hue deterioration, and a molded article of the composition.

[Background Art]

Conventionally, materials obtained by dispersing organic and inorganic light-diffusing agents in transparent thermoplastic resins such as polycarbonate resin, acrylic resin and vinyl chloride resin have been widely used in applications requiring light-diffusing properties.

Polycarbonate resin compositions having light-diffusing properties are disclosed in PTL 1 to 2 etc., but molded articles obtained from these polycarbonate resin compositions exhibited low light transmittance. In addition, PTL 3 discloses a light guide plate obtained by blending oxide fine particles in a transparent resin such as poly(methyl methacrylate), but this light guide plate has drawbacks such as light transmission properties readily decreasing and satisfactory surface light-emitting properties being difficult to achieve.

In addition, light diffusion sheets composed of transparent resins such as polymethyl methacrylate resin, and polycarbonate resin and edge light systems obtained by attaching an LED light source to a side surface of a light guide plate have been commonly used in recent years as surface light sources for backlights used in liquid crystal display devices.

Titanium oxide or the like having a particle size of, for example, 200 to 300 nm is used as light-diffusing agents in light diffusion sheets and light guide plates, but light-diffusing agents having such particle sizes have the property of strongly scattering visible light, and especially visible light in the wavelength region 400 to 600 nm, which is twice the particle size, and problems occur in cases, where white LEDs are used as edge light sources, such as light having a color close to blue being preferentially scattered, wavelengths of yellow light or shorter being remained as the distance from the light source increases, and color hue deteriorating.
Performance required of lighting fixtures, various displays and liquid crystal display devices that use LEDs has continued to increase in recent years, and there is a strong demand for a resin composition which eliminates scattering wavelength selectivity of incident light and reduces surface luminescence color hue deterioration.

[Citation List]

[Patent Literature]

[PTL 1] JP H03-143950 A
[PTL 2] JP H06-32973 A
[PTL 3] JP H05-341284 A

[Summary of Invention]

[Technical Problem]

The object of (problem to be solved by) the present invention is to provide a thermoplastic resin composition which eliminates scattering wavelength selectivity of incident light and which can reduce surface luminescence color hue deterioration, and also to provide a molded article which is obtained using the thermoplastic resin composition and which has no surface luminescence color hue deterioration and exhibits excellent surface luminescence color hue.

[Solution to Problem]

As a result of diligent research carried out in order to solve the problems mentioned above, the inventors of the present invention found that the problems mentioned above can be solved by a thermoplastic resin composition containing a specific amount of spherical fine particles having a specific average particle diameter larger than in the prior art, namely 500 to 2500 nm, and thereby completed the present invention.
The present invention relates to the following thermoplastic resin composition, and a molded article comprising same.

[1] A thermoplastic resin composition including 0.0001 to 0.09 parts by mass of spherical fine particles (B) having an average particle diameter of 500 to 2500 nm relative to 100 parts by mass of a transparent thermoplastic resin (A).
[2] The thermoplastic resin composition of [1] above, wherein the transparent thermoplastic resin (A) is a polycarbonate resin or an acrylic resin.
[3] The thermoplastic resin composition of [1] or [2] above, wherein a difference in refractive index between the spherical fine particles (B) and the transparent thermoplastic resin (A) is 0.3 or more.
[4] The thermoplastic resin composition of any of [1] to [3] above, wherein the spherical fine particles (B) are titanium oxide, zinc oxide or zirconium oxide.
[5] A molded article comprising the thermoplastic resin composition of any of [1] to [4] above.
[6] The molded article of [5] above, which is a surface light-emitting body.
[7] The molded article of [5] or [6] above, wherein when light is incident from an LED light source disposed along a side surface of a molded article having a thickness of 3 mm, an absolute value of a difference $\Delta x$ of a color mixture ratio x of tristimulus values (XYZ), which are obtained by measuring at a measurement point close to an incident light part of an end face of the molded article and a point 50 mm away from the end face of the molded article, is less than 0.01.
[8] The molded article of [5] or [6] above, wherein when light is incident from an LED light source disposed along a side surface of a molded article having a thickness of 3 mm, an absolute value of a difference $\Delta y$ of a color mixture ratio y of tristimulus values (XYZ), which are obtained by measuring at a measurement point close to an incident light part of an end face of the molded article and a point 50 mm away from the end face of the molded article, is less than 0.01.
[9] The molded article of [5] or [6] above, which has a haze value of 0.5 to 20% when measured at a thickness of 3 mm.
[10] The molded article of any of [5] to [9] above, which is a molded body for an edge light system.
[11] The molded article of any of [5] to [9] above, which is a molded body for image projection.
[12] The molded article of any of [5] to [9] above, which is a light guide member.
[13] The molded article of any of [5] to [9] above, which is a member for a display.
[14] The molded article of any of [5] to [9], which is a member for a motor vehicle lamp instrument.

[Advantageous Effects of Invention]

The thermoplastic resin composition of the present invention has low scattering wavelength selectivity of incident light, can reduce surface luminescence color hue deterioration, and can give a molded article and a surface light-emitting article which have no scattering wavelength selectivity of incident light and exhibit excellent surface luminescence color hue. In addition, an obtained molded article can be used particularly advantageously as a molded body for an edge light, a molded body for image projection, a light guide member, or a member for a lighting device or a display device.

[Brief Description of Drawings]

Fig. 1 is a photograph that shows the state of surface luminescence at the time of light incidence of molded articles obtained in Example 2 and Comparative Example 5 of the present invention.
Fig. 2 is a planar view that shows measurement points at which the color mixture ratio of tristimulus values (XYZ) of a planar plate are measured in examples and comparative examples.

[Description of Embodiments]

The present invention will now be explained in greater detail through the use of embodiments and exemplifications, but it should be understood that the present invention is not limited to the embodiments and illustrations given below.
Moreover, in the description of the present application, the symbol "-" means that the upper and lower limits of the numerical values mentioned before and after the symbol are included, unless explicitly stated otherwise.
The thermoplastic resin composition of the present invention is characterized by containing 0.0001 to 0.09 parts by mass of spherical fine particles (B) having an average particle diameter of 500 to 2500 nm relative to 100 parts by mass of a transparent thermoplastic resin (A).

[Transparent thermoplastic resin (A)]

The transparent thermoplastic resin used in the thermoplastic resin composition of the present invention is not

particularly limited, and examples thereof include thermoplastic resins such as polycarbonate resin; acrylic resin such as polymethyl methacrylate resin; amorphous polyester resin such as polyethylene terephthalate (PET) resin; polystyrene resin; cyclic polyolefin resin; and vinyl chloride resin, and polymer alloys comprising two or more of these thermoplastic resin.

Of these, polycarbonate resin and acrylic resin are preferred from the perspective of transparency, with polycarbonate resin being particularly preferred.

[Polycarbonate resin]

The type of polycarbonate resin used in the thermoplastic resin composition of the present invention is not limited.

A polycarbonate resin is a polymer having a carbonate bond-containing basic structure represented by the general formula:

-[-O-X-O-C(=O)-]-. Moreover, in the formula, the X moiety generally denotes a hydrocarbon group, but it is possible to use X moieties into which heteroatoms or heterobonds have been introduced in order to impart a variety of characteristics.

In addition, polycarbonate resin can be classified into aromatic polycarbonate resin, in which a carbon atom directly bonded to a carbonate bond is an aromatic carbon atom, and aliphatic polycarbonate resin, in which a carbon atom directly bonded to a carbonate bond is an aliphatic carbon atom. Of these, aromatic polycarbonate resin is preferred from perspectives such as heat resistance, mechanical properties and electrical properties.

These are not limited to specific types of polycarbonate resin, but examples thereof include polycarbonate polymers obtained by reacting a dihydroxy compound with a carbonate precursor. On such occasion, it is possible to react a polyhydroxy compound or the like in addition to a dihydroxy compound and carbonate precursor. In addition, it is also possible to use a method in which a cyclic ether is reacted with carbon dioxide as a carbonate precursor. In addition, the polycarbonate polymer may be a straight chain or branched chain polymer. Furthermore, the polycarbonate polymer may be a homopolymer comprising one type of repeating unit or a copolymer having two or more types of repeating unit. Here, copolymers may be selected from among a variety of copolymer forms, such as random copolymer and block copolymer. Moreover, such polycarbonate polymers are generally thermoplastic resins.

Among monomers that serve as raw materials for aromatic polycarbonate resin, examples of aromatic dihydroxy compounds include:

dihydroxybenzene compounds such as 1,2-dihydroxybenzene, 1,3-dihydroxybenzene (that is, resorcinol) and 1,4-dihydroxybenzene;
dihydroxybiphenyl compounds such as 2,5-dihydroxybiphenyl, 2,2'-dihydroxybiphenyl and 4,4'-dihydroxybiphenyl;
dihydroxynaphthalene compounds such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene and 2,7-dihydroxynaphthalene;
dihydroxydiaryl ether compounds such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy)benzene and 1,3-bis(4-hydroxyphenoxy)benzene;

bis(hydroxyaryl)alkanes such as 2,2-bis(4-hydroxyphenyl)propane (that is, bisphenol A), 1,1-bis(4-hydroxyphenyl)propane, 2,2-bis(3-methyl-4-hydroxyphenyl)propane, 2,2-bis(3-methoxy-4-hydroxyphenyl)propane, 2-(4-hydroxyphenyl)-2-(3-methoxy-4-hydroxyphenyl)propane, 1,1-bis(3-tert-butyl-4-hydroxyphenyl)propane, 2,2-bis(3,5-dimethyl-4-hydroxyphenyl)propane, 2,2-bis(3-cyclohexyl-4-hydroxyphenyl)propane, 2-(4-hydroxyphenyl)-2-(3-cyclohexyl-4-hydroxyphenyl)propane, $\alpha,\alpha'$-bis(4-hydroxyphenyl)-1,4-diisopropylbenzene, 1,3-bis[2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl) (4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 4,4-bis(4-hydroxyphenyl)heptane, 2,2-bis(4-hydroxyphenyl)nonane, 1,1-bis(4-hydroxyphenyl)decane, and 1,1-bis(4-hydroxyphenyl)dodecane;

bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butyl-cyclohexane, 1,1-bis(4-hydroxyphenyl)-3-phenylcyclohexane, and 1,1-bis(4-hydroxyphenyl)-4-phenylcyclohexane;
cardo structure-containing bisphenol compounds such as 9,9-bis(4-hydroxyphenyl)fluorene and 9,9-bis(4-hydroxy-3-methylphenyl)fluorene; dihydroxydiaryl sulfide compounds such as 4,4'-dihydroxydiphenyl sulfide and 4,4'-dihydroxy-3,3'-dimethyldiphenyl sulfide; dihydroxydiaryl sulfoxide compounds such as 4,4'-dihydroxydiphenyl sulfoxide, 4,4'-dihydroxy-3,3'-dimethyldiphenyl sulfoxide; and dihydroxydiaryl sulfone compounds such as 4,4'-dihydroxydiphenyl sulfone, 4,4'-dihydroxy-3,3'-dimethyldiphenyl sulfone.

Of these, bis(hydroxyaryl)alkane compounds are preferred, and of these, bis(4-hydroxyphenyl)alkane compounds are preferred and 2,2-bis(4-hydroxyphenyl)propane (that is, bisphenol A) is particularly preferred from the perspectives of impact resistance and heat resistance.

Moreover, the aromatic dihydroxy compound may be a single type or a combination of two or more arbitrary types thereof combined at arbitrary proportions.

In addition, examples of monomers that serve as raw materials for aliphatic polycarbonate resin include:

alkane diol compounds such as ethane-1,2-diol, propane-1,2-diol, propane-1,3-diol, 2,2-dimethylpropane-1,3-diol, 2-methyl-2-propylpropane-1,3-diol, butane-1,4-diol, pentane-1,5-diol, hexane-1,6-diol and decane-1,10-diol;

cycloalkane diol compounds such as cyclopentane-1,2-diol, cyclohexane-1,2-diol, cyclohexane-1,4-diol, 1,4-cyclohexanedimethanol, 4-(2-hydroxyethyl)cyclohexanol and 2,2,4,4-tetramethyl-cyclobutane-1,3-diol;

glycol compounds such as ethylene glycol, 2,2'-oxydiethanol (that is, diethylene glycol), triethylene glycol, propylene glycol and spiroglycol;

aralkyl diol compounds such as 1,2-benzenedimethanol, 1,3-benzenedimethanol, 1,4-benzenedimethanol, 1,4-benzenediethanol, 1,3-bis(2-hydroxyethoxy)benzene, 1,4-bis(2-hydroxyethoxy)benzene, 2,3-bis(hydroxymethyl)naphthalene, 1,6-bis(hydroxyethoxy)naphthalene, 4,4'-biphenyldimethanol, 4,4'-biphenyldiethanol, 1,4-bis(2-hydroxyethoxy)biphenyl, bisphenol A bis(2-hydroxyethyl) ether and bisphenol S bis(2-hydroxyethyl) ether; and

cyclic ether compounds such as 1,2-epoxyethane (that is, ethylene oxide), 1,2-epoxypropane (that is, propylene oxide), 1,2-epoxycyclopentane, 1,2-epoxycyclohexane, 1,4-epoxycyclohexane, 1-methyl-1,2-epoxycyclohexane, 2,3-epoxynorbornane and 1,3-epoxypropane.

Among monomers that serve as raw materials for aromatic polycarbonate resin, examples of polycarbonate precursors include carbonyl halides and carbonate esters. Moreover, the carbonate precursor may be a single type or a combination of two or more arbitrary types thereof combined at arbitrary proportions.

Specific examples of carbonyl halides include phosgene; and haloformates such as bischloroformates of dihydroxy compounds and monochloroformates of dihydroxy compounds.

Specific examples of carbonate esters include diaryl carbonate compounds such as diphenyl carbonate and ditolyl carbonate; dialkyl carbonate compounds such as dimethyl carbonate and diethyl carbonate; and carbonates of dihydroxy compounds, such as biscarbonates of dihydroxy compounds, monocarbonates of dihydroxy compounds and cyclic carbonates.

<Method for producing polycarbonate resin>

The method for producing the polycarbonate resin is not particularly limited, and an arbitrary method can be used. Examples thereof include interfacial polymerization methods, melt transesterification methods, the pyridine process, ring opening polymerization of cyclic carbonate compounds, and solid phase transesterification of prepolymers. A detailed explanation will now be given of the most suitable of these methods.

<Interfacial polymerization method>

First, an explanation will be given of a case in which the polycarbonate resin is produced using an interfacial polymerization method.

In an interfacial polymerization method, a polycarbonate resin is obtained by reacting a dihydroxy compound with a carbonate precursor (preferably phosgene) in the presence of an organic solvent that is inert in the reaction and an aqueous alkaline solution while maintaining a pH of 9 or more, and then carrying out interfacial polymerization in the presence of a polymerization catalyst. Moreover, a molecular weight-adjusting agent (a chain terminator) may, if necessary, be present in the reaction system, and an antioxidant may be present in the reaction system in order to prevent oxidation of the dihydroxy compound.

The dihydroxy compound and carbonate-forming compound that serve as raw materials of the polycarbonate resin are as described above. Moreover, among carbonate-forming compounds, phosgene is preferably used, and a method in which phosgene is used is known as the phosgene method. Examples of organic solvents that are inert in the reaction include chlorinated hydrocarbons such as dichloromethane, 1,2-dichloroethane, chloroform, monochlorobenzene and dichlorobenzene; and aromatic hydrocarbons such as benzene, toluene and xylene. Moreover, the organic solvent may be a single type of solvent or a combination of two or more arbitrary types thereof combined at arbitrary proportions.

Examples of alkaline compounds contained in the aqueous alkaline solution include alkali metal compounds

or alkaline earth metal compounds such as sodium hydroxide, potassium hydroxide, lithium hydroxide and sodium hydrogen carbonate, but of these, sodium hydroxide and potassium hydroxide are preferred. Moreover, the alkaline compound may be a single type of compound or a combination of two or more arbitrary types thereof combined at arbitrary proportions.

The concentration of the alkaline compound in the aqueous alkaline solution is not limited, but in general, a concentration of 5 to 10 mass% is used in order to control the pH of the aqueous alkaline solution within the range 10 to 12 during the reaction. In addition, in cases where phosgene is blown into the reaction system, it is generally preferable for the molar ratio of the dihydroxy compound and the alkaline compound to be 1:1.9 or more, and especially 1:2.0 or more, and 1:3.2 or less, and especially 1:2.5 or less in order to control the pH of the aqueous phase within the range 10 to 12, and preferably within the range 10 to 11.

Examples of the polymerization catalyst include aliphatic tertiary amines such as trimethylamine, triethylamine, tributylamine, tripropylamine and trihexylamine; alicyclic tertiary amines such as N,N'-dimethylcyclohexylamine and N,N'-diethylcyclohexylamine; aromatic tertiary amines such as N,N'-dimethylaniline and N,N'-diethylaniline; quaternary ammonium salts such as trimethylbenzyl ammonium chloride, tetramethyl ammonium chloride and triethylbenzyl ammonium chloride; pyridine; guanine; guanidine salts, and the like. Moreover, the polymerization catalyst may be a single type of catalyst or a combination of two or more arbitrary types thereof combined at arbitrary proportions.

Examples of molecular weight regulators include aromatic phenol compounds having monohydric phenolic hydroxyl groups; aliphatic alcohols such as methanol and butanol; mercaptans; and phthalimide, but of these, aromatic phenol compounds are preferred. Specific examples of such aromatic phenol compounds include alkyl group-substituted phenol compounds such as m-methylphenol, p-methylphenol, m-propylphenol, p-propylphenol, p-tert-butylphenol and p-long chain alkyl-substituted phenol compounds; vinyl group-containing phenol compounds such as isopropanylphenol; epoxy group-containing phenol compounds; and carboxyl group-containing phenol compounds such as o-oxybenzoic acid and 2-methyl-6-hydroxyphenyl acetic acid. Moreover, the molecular weight regulator may be a single type or a combination of two or more arbitrary types thereof combined at arbitrary proportions.

The usage quantity of the molecular weight regulator is generally 0.5 moles or more, and preferably 1 mole or more, and generally 50 moles or less, and preferably 30 moles or less, relative to 100 moles of the dihydroxy compound that is a raw material. By setting the usage quantity of the molecular weight-adjusting agent to fall within this range, it is possible to improve the thermal stability and resistance to hydrolysis when the obtained polycarbonate resin is used in the thermoplastic resin composition.

When carrying out the polymerization reaction, the order in which the reactants (raw materials), reaction solvent, catalyst, additives, and the like, are blended is not limited as long as the desired polycarbonate resin can be obtained, and an appropriate order should be set arbitrarily. For example, in cases where phosgene is used as a carbonate-forming compound, the molecular weight regulator can be blended at any point between the reaction between the dihydroxy compound and the phosgene (a phosgenation reaction) and the start of the polymerization reaction.
Moreover, the reaction temperature is generally 0 to 40°C, and the reaction time is generally between several minutes (for example, 10 minutes) and several hours (for example, 6 hours).

<Melt transesterification method>

An explanation will now be given of a case in which the polycarbonate resin is produced using a melt transesterification method.

In a melt transesterification method, a transesterification reaction is carried out between, for example, a carbonic acid diester and a dihydroxy compound.

Compounds mentioned above are used as the dihydroxy compound and the carbonate ester, but among the carbonate esters used, diphenyl carbonate and substituted diphenyl carbonates are preferred, and diphenyl carbonate is more preferred. Moreover, the carbonate ester may be a single type of ester or a combination of two or more arbitrary types thereof combined at arbitrary proportions.

The proportions of the dihydroxy compound and the carbonate ester are not limited as long as the desired polycarbonate resin can be obtained, but it is preferable to use the carbonate ester at an equimolar quantity or more relative to 1 mole of the dihydroxy compound, and especially at a quantity of 1.01 moles or more relative to 1 mole of the dihydroxy compound. Moreover, the upper limit of this proportion is generally 1.30 moles or less. By setting these proportions to fall within this range, the quantity of terminal hydroxyl groups can be adjusted within an appropriate range.

In polycarbonate resin, the quantity of terminal hydroxyl groups tends to have a major effect on thermal stability, resistance to hydrolysis, color tone, and the like. Therefore, the quantity of terminal hydroxyl groups may be adjusted if necessary using any publicly known method. In transesterification reactions, it is generally possible to obtain a polycarbonate resin having the desired quantity of terminal hydroxyl groups by, for example, adjusting the blending proportions of the carbonate ester and the dihydroxy compound or by adjusting the degree of pressure reduction during the transesterification reaction. Moreover, by carrying out such operations, it is generally possible to adjust the molecular weight

of the obtained polycarbonate resin.

In cases where the quantity of terminal hydroxyl groups is adjusted by adjusting the blending proportions of the carbonate ester and the dihydroxy compound, the blending proportions should be as mentioned above.

In addition, an example of a more proactive adjustment method is a method in which a chain terminator is separately blended during the reaction. In such cases, examples of chain terminators able to be used include monohydric phenol compounds, monohydric carboxylic acids and carbonate esters. Moreover, the chain terminator may be a single type or a combination of two or more arbitrary types thereof combined at arbitrary proportions.

When producing a polycarbonate resin by a melt transesterification method, a transesterification catalyst is generally used. Any transesterification catalyst can be used. Of these, the use of, for example, an alkali metal compound and/or an alkaline earth metal compound is preferred. In addition, it is possible to supplementally use a basic compound such as a basic boron compound, a basic phosphorus compound, a basic ammonium compound or an amine compound. Moreover, the transesterification catalyst may be a single type of catalyst or a combination of two or more arbitrary types thereof combined at arbitrary proportions.

In melt transesterification methods, the reaction temperature is generally 100 to 320°C. In addition, the pressure during the reaction is generally a reduced pressure of 2 mm Hg or less. A specific procedure is to carry out a melt polycondensation reaction under the temperature and pressure ranges mentioned above while removing by-products such as aromatic hydroxy compounds.

The melt polycondensation reaction can be carried out using a batch type method or a continuous method. When carrying out a batch type reaction, the order in which the reactants (raw materials), reaction solvent, catalyst, additives, and the like are blended is not limited as long as the desired polycarbonate resin can be obtained, and an appropriate order should be set arbitrarily. However, from perspectives such as stability of the polycarbonate resin and the resin composition, it is preferable for the melt polycondensation reaction to be carried out using a continuous process.

In the melt transesterification method, a catalyst deactivator may be used if necessary. Any compound that neutralizes the transesterification catalyst can be used as a catalyst deactivator. Examples thereof include sulfur-containing acidic compounds and derivatives thereof. Moreover, the catalyst deactivator may be a single type or a combination of two or more arbitrary types thereof combined at arbitrary proportions.

The usage quantity of the catalyst deactivator is generally 0.5 equivalents or more, and preferably 1 equivalent or more, and generally 10 equivalents or less, and preferably 5 equivalents or less, relative to the alkali metal or alkaline earth metal contained in the transesterification catalyst. Furthermore, the usage quantity of the catalyst deactivator is generally 1 ppm or more and generally 100 ppm or less, and preferably 50 ppm or less, relative to the polycarbonate resin.

The polycarbonate resin preferably contains a certain proportion or more of a polycarbonate resin whose structural viscosity index N falls within a prescribed range. The structural viscosity index N is an indicator for evaluating the flow properties of a molten substance. In general, the melt characteristics of polycarbonate resin can be expressed by the formula: $\gamma = a \times \sigma^N$.

In the formula, $\gamma$ denotes shear rate, a denotes a constant, $\sigma$ denotes stress, and N denotes the structural viscosity index.

In the numerical formula above, Newtonian fluidity is exhibited when N=1, and non-Newtonian fluidity increases as the value of N increases. That is to say, flow characteristics of a molten substance are evaluated using the magnitude of the structural viscosity index N. In general, a polycarbonate resin having a high structural viscosity index N tends to have a higher melt viscosity in a low shear region. Therefore, in cases where a polycarbonate resin having a high structural viscosity index N is mixed with another polycarbonate resin, it is possible to suppress dripping when an obtained resin composition is combusted and improve flame retardancy.

In cases where a certain proportion or more of a polycarbonate resin for which the structural viscosity index N falls within a prescribed range is contained, it is preferable to contain a certain proportion or more of a polycarbonate resin for which the structural viscosity index N is preferably 1.2 or more, more preferably 1.25 or more, and preferably 1.28 or more, and is preferably 1.8 or less, more preferably 1.7 or less. By incorporating this type of polycarbonate resin having a high structural viscosity index N, it is possible to suppress dripping and improve flame retardancy when the resin composition of the present invention is combusted. In addition, by setting the structural viscosity index N to be no higher than the upper limit of the range mentioned above, moldability of the resin composition of the present invention can be maintained within a favorable range.

Moreover, the structural viscosity index N can be expressed by $\mathrm{Log}\eta_a = [(1-N)/N] \times \mathrm{Log}\gamma + C$, which is derived from the formula above, as disclosed in JP 2005-232442 A for example. In the formula above, N denotes the structural viscosity index, $\gamma$ denotes shear rate, C denotes a constant, and $\eta_a$ denotes apparent viscosity. As can be understood from this formula, the value of N can be evaluated from $\gamma$ and $\eta_a$ in low shear regions having significantly different viscosity behaviors. For example, the value of N can be determined from $\eta_a$ when $\gamma$=12.16 $sec^{-1}$ and $\gamma$=24.32 $sec^{-1}$.

In cases where the polycarbonate resin used in the resin composition of the present invention contains a polycarbonate resin having a structural viscosity index N that falls within a prescribed range, the content thereof is preferably 20 mass% or more, more preferably 30 mass% or more, and further preferably 50 mass% or more, of the

polycarbonate resin. Moreover, the upper limit thereof is generally 100 mass% or less, but is preferably 90 mass% or less, and more preferably 85 mass% or less.

In order to produce a polycarbonate resin having a structural viscosity index N that falls within a prescribed range, a polycarbonate resin having a structural viscosity index N that falls within a prescribed range can be obtained in accordance with the polycarbonate resin production method described above, but it is preferable to constitute in such a way as to produce a polycarbonate resin having a branched structure (hereinafter referred to as a "branched polycarbonate resin" as appropriate) from the perspective of ease of obtaining a polycarbonate resin having a structural viscosity index N that falls within a prescribed range. This is because branched polycarbonate resin tends to have a higher structural viscosity index N.

Examples of methods for producing branched polycarbonate resin include methods disclosed in JP H08-259687 A and JP H08-245782 A. In the methods disclosed in these documents, it is possible to obtain an aromatic polycarbonate resin having a high structural viscosity index and excellent stability to hydrolysis without using a branching agent by selecting catalyst conditions and production conditions when reacting a dihydroxy compound and a carbonic acid diester using a melt transesterification method.

In addition, an example of another method for producing a branched polycarbonate resin is a method comprising using a trifunctional or higher polyfunctional compound (a branching agent) in addition to a dihydroxy compound and a carbonate-forming compound that are raw materials of the polycarbonate resin mentioned above, and copolymerizing these using an interfacial polymerization method or a melt transesterification method.

Examples of trifunctional or higher polyfunctional compounds include polyhydroxy compounds such as 1,3,5-trihydroxybenzene (phloroglucin), 4,6-dimethyl-2,4,6-tri(4-hydroxyphenyl)heptene-2, 4,6-dimethyl-2,4,6-tri(4-hydroxyphenyl)heptane, 2,6-dimethyl-2,4,6-tri(4-hydroxyphenyl)heptene-3, 1,3,5-tri(4-hydroxyphenyl)benzene and 1,1,1-tri(4-hydroxyphenyl)ethane; 3,3-bis(4-hydroxyaryl)oxyindole (that is, isatinbisphenol), 5-chloroisatin, 5,7-dichloroisatin and 5-bromoisatin. Of these, 1,1,1-tri(4-hydroxyphenyl)ethane is preferred.

The polyfunctional compound can be used as a replacement for a part of the dihydroxy compound. Relative to the entire amount of a dihydroxy compound raw material, the usage quantity of a polyfunctional aromatic compound is generally 0.01 mol% or more, and preferably 0.1 mol% or more, and is generally 10 mol% or less, and preferably 3 mol% or less.

Moreover, the polyfunctional compound may be a single type of compound or a combination of two or more arbitrary types thereof combined at arbitrary proportions.

Among the methods mentioned above as methods for producing branched polycarbonate resin, the method mentioned above for producing a branched polycarbonate resin using a melt transesterification method is particularly preferred. This is because a branched polycarbonate resin can be produced relatively inexpensively from raw materials that can be easily procured on an industrial scale. Therefore, the polycarbonate resin is preferably produced using a melt transesterification method.

Moreover, a polycarbonate resin having a structural viscosity index N that falls within a prescribed range may be a single resin in isolation or a combination of two or more arbitrary types thereof combined at arbitrary proportions.

<Other matters relating to the polycarbonate resin>

The molecular weight of the polycarbonate resin is arbitrary and should be selected and decided as appropriate, but the viscosity average molecular weight [Mv] is generally 10,000 or more, preferably 14,000 or more, and more preferably 16,000 or more, and is generally 40,000 or less, and preferably 30,000 or less. By setting the viscosity average molecular weight to be no lower than the lower limit of the range mentioned above, it is possible to further improve the mechanical strength of the resin composition, and this viscosity average molecular weight is more preferred in cases where the thermoplastic resin composition is to be used in applications requiring high mechanical strength. Meanwhile, by setting the viscosity average molecular weight to be no higher than the upper limit of the range mentioned above, it is possible to better suppress a reduction in the fluidity of the resin composition, increase molding processing properties, and facilitate molding.

Moreover, it is possible to use a mixture of two or more types of polycarbonate resin having different viscosity average molecular weights, and in such cases, it is possible to mix polycarbonate resin whose viscosity average molecular weights fall outside the preferred range mentioned above.

The polycarbonate resin preferably contains a high molecular weight polycarbonate resin, for example a polycarbonate resin having a viscosity average molecular weight [Mv] of preferably 50,000 to 95,000. The viscosity average molecular weight of the high molecular weight polycarbonate resin is more preferably 55,000 or more, further preferably 60,000 or more, and within this range is preferably 61,000 or more and especially 62,000 or more, and is more preferably 90,000 or less, further preferably 85,000 or less, and within this range is preferably 80,000 or less, especially 75,000 or less, and 70,000 or less in particular.

In cases where a high molecular weight polycarbonate resin is contained, the content thereof is preferably 5

mass% or more, more preferably 10 mass% or more, and further preferably 15 mass% or more, of the polycarbonate resin. Moreover, the upper limit of this content is preferably 40 mass% or less, and more preferably 30 mass% or less.

Moreover, the viscosity average molecular weight [Mv] of the polycarbonate resin (A) in the present invention is a value obtained by determining the intrinsic viscosity [$\eta$] (units: dl/g) at 25°C using a Ubbelohde type viscometer using methylene chloride as a solvent, and then calculating the viscosity average molecular weight from the Schnell viscosity equation, that is, $\eta = 1.23 \times 10^{-4}\ Mv^{0.83}$.

In addition, the intrinsic viscosity [$\eta$] is a value obtained by measuring the specific viscosity [$\eta_{sp}$] at a number of solution concentrations [C] (g/dl) and calculating the intrinsic viscosity from the following expression.

[Numerical Formula 1]

$$\eta = \lim_{c \to 0} \eta_{sp} / \mathrm{c}$$

The terminal hydroxyl group concentration in the polycarbonate resin is arbitrary and should be selected and decided as appropriate, but is generally 1000 ppm or less, preferably 1500 ppm or less, and more preferably 1000 ppm or less. By constituting in this way, it is possible to further improve the residence thermal stability and color tone of the resin composition of the present invention. In addition, the lower limit of this concentration is generally 10 ppm or more, preferably 30 ppm or more, and more preferably 40 ppm or more, for a polycarbonate resin produced using a melt transesterification method in particular. Due to this configuration, it is possible to suppress a decrease in molecular weight and further improve the mechanical characteristics of the resin composition of the present invention.

Moreover, units for terminal hydroxyl group concentration are such that the mass of terminal hydroxyl groups is expressed in terms of ppm relative to the mass of the polycarbonate resin. This measurement method is a colorimetric method involving use of a titanium tetrachloride / acetic acid method (this is described in Macromol. Chem. 88 215 (1965)).

In addition, in order to improve the appearance of a molded article or improve the fluidity, the polycarbonate resin may contain a polycarbonate oligomer. The viscosity average molecular weight [Mv] of this polycarbonate oligomer is generally 1500 or more, and preferably 2000 or more, and is generally 9500 or less, and preferably 9000 or less. Furthermore, it is preferable for the contained polycarbonate oligomer to account for 30% by mass or less of the polycarbonate resin (including the polycarbonate oligomer).

[Acrylic resin]

The acrylic resin is preferably a methyl methacrylate resin, and the amount of a methyl methacrylate monomer constituent unit is 80 mol% or more, and preferably 90 mol% or more, relative to the total monomer amount of all constituent units. It is also preferable for the acrylic resin to be a copolymer of methyl methacrylate and methyl acrylate, ethyl acrylate, butyl acrylate, or the like.

In addition, the mass average molecular weight of the acrylic resin is preferably 20,000 to 200,000, and more preferably 50,000 to 150,000.

The mass average molecular weight of the acrylic resin is a value measured by means of gel permeation chromatography using standard polystyrene as a standard sample.

Methods for producing acrylic resin are broadly classified into emulsion polymerization methods, suspension polymerization methods and continuous polymerization methods, but the acrylic resin used in the present invention is preferably an acrylic resin produced using a continuous polymerization method. Furthermore, continuous polymerization methods can be classified into continuous bulk polymerization methods and continuous solution polymerization methods, but an acrylic resin obtained using either of these production methods can be used in the present invention.

It is possible to use one acrylic resin in isolation, or a combination of two or more types thereof.

A polycarbonate resin or an acrylic resin is preferred as the transparent thermoplastic resin (A), as mentioned above, but in cases where a thermoplastic resin other than a polycarbonate resin or acrylic resin is contained, the content thereof is preferably 20 parts by mass or less, more preferably 10 parts by mass or less, further preferably 5 parts by mass or less, and particularly preferably 3 parts by mass or less, relative to 100 parts by mass of the polycarbonate resin or acrylic resin.

[Spherical fine particles (B)]

The thermoplastic resin composition of the present invention contains spherical fine particles (B). In addition, spherical fine particles (B) having an average particle diameter of 500 to 2500 nm are contained at a quantity of 0.0001 to 0.09 parts by mass relative to 100 parts by mass of a transparent thermoplastic resin (A).

Surface light-emitting bodies obtained by blending diffusing fine particles such as titanium oxide in a thermoplastic resin existed in the past, but because the particle size of fine particles that are actually used is generally smaller than the wavelength of the light, the mechanism by which incident light is scattered is uniform Mie scattering, and as the distance from a light source increases, the color hue changes and a yellow tinge appears. Conversely, the spherical fine particles (B) having a large particle size have no scattering wavelength selectivity of incident light and enable a good surface luminescence color hue in which surface luminescence color hue deterioration is reduced.

Fig. 1 is a photograph that shows the state of surface luminescence at the time of light incidence of molded articles obtained in Example 2 and Comparative Example 5. In Fig. 1, the left side is a molded article of Comparative Example 5, in which a light-diffusing agent (titanium oxide) having an average particle diameter of 200 nm is blended, and a white LED edge light source (not shown) is attached to the lower part of the molded article, yellowing increases as the distance from the light source increases, and significant yellowing occurs towards the upper edge part on the opposite side from the edge light.

Meanwhile, the right side of Fig. 1 is a molded article of Example 2, in which a light-diffusing agent (titanium oxide) having an average particle diameter of 1000 nm is blended, and surface luminescence from a position close to the edge light as far as the edge on the opposite side is uniform and has little surface luminescence deterioration.

As mentioned above, the spherical fine particles (B) have an average particle diameter of 500 to 2500 nm, preferably 600 nm or more, more preferably 700 nm or more, and further preferably 800 nm or more, and preferably 2300 nm or less, more preferably 2200 nm or less, and further preferably 2000 nm or less. If the average particle diameter exceeds 2500 nm, a foreign article sensation can be felt when an object is not illuminated, and the object cannot be called transparent.

Here, the average particle diameter is the median value ($D_{50}$) measured using a laser diffraction and scattering method.

Moreover, the term "spherical" in the spherical fine particles (B) means either completely spherical, a shape having an elliptical cross section or the like, or an approximately spherical shape, such as egg shaped, and more specifically is a shape having an aspect ratio (the ratio of long axis to short axis) of generally 1.3 or less, preferably 1.2 or less, and more preferably 1.1 or less.

The spherical fine particles (B) are preferably selected and combined so that the difference in refractive index from the transparent thermoplastic resin (A) is 0.3 or more (in the present specification, this "difference" means the absolute value of the difference in refractive index between both components). The difference in refractive index is more preferably 0.4 or more, further preferably 0.8 or more, and particularly preferably 1.0 or more, and is more preferably 1.8 or less, more preferably 1.6 or less, especially 1.4 or less, and particularly preferably 1.3 or less. If the difference in refractive index falls within this range, it is possible to further improve the effect of reducing surface luminescence color hue deterioration.

The spherical fine particles (B) are preferably inorganic particles, and it is possible to use, for example, titanium dioxide, zirconium oxide, zinc oxide, zinc sulfide, niobium oxide or tantalum oxide. Of these, titanium dioxide, zinc oxide and zirconium oxide are preferred, and titanium dioxide is particularly preferred.

The content of the spherical fine particles (B) is 0.0001 to 0.09 parts by mass relative to 100 parts by mass of the transparent thermoplastic resin (A). In cases where this content is less than 0.0001 parts by mass, surface luminescence brightness is insufficient and the favorable surface luminescence of the present invention is not achieved, and in cases where this content exceeds 0.09 parts by mass, transparency decreases, surface luminescence brightness decreases at locations far from a light source, and the characteristic surface luminescence of the present invention is difficult to achieve.

[Aromatic compound (C)]

The thermoplastic resin composition of the present invention preferably contains an aromatic compound (C) represented by general formula (1) below.

[C1]

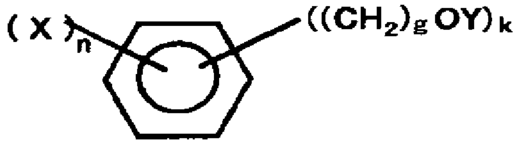

(1)

(In general formula (1), Y denotes a hydrogen atom or an organic group not containing nitrogen, sulfur or a halogen element.

In a case where Y is a hydrogen atom, X is an alkyl group or an optionally substituted aryl group, and in a case where Y is an organic group not containing nitrogen, sulfur or a halogen element, X is an organic group not containing nitrogen, sulfur or a halogen element, and in this case, X and Y may be the same as, or different from, each other.

g is an integer that is 1 or 2.

n is an integer between 0 and 5, and in a case where n is 2 or more, the number n of X moieties may be the same as, or different from, each other.

k is an integer between 1 and 4, and in a case where k is 2 or more, two or more $-(CH_2)_gOY$ groups, in which Y is an organic group, may be the same as, or different from, each other. However, the value of n+k is 6 or less.)

If a pellet of the present invention contains the aromatic compound (C), a superior color hue improvement effect can be achieved.

In a case where k=2 and two $CH_2OY$ groups are present in general formula (1), the substitution positions of the $CH_2OY$ groups are preferably the 1- and 4- positions.

It is preferable for g to be 1 and k to be 1 in general formula (1) from the perspective of a color hue improvement effect. Therefore, the aromatic compound (C) represented by general formula (1) is preferably a benzyloxy compound represented by general formula (1A) below or a benzyl alcohol compound.

[C2]

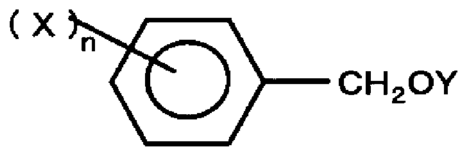

(1A)

(In general formula (1A), X, Y and n are defined in the same way as in general formula (1) above.)

In general formulae (1) and (1A), in cases where X and Y are organic groups that do not contain nitrogen, sulfur or a halogen element, the organic groups are not particularly limited as long as these are groups that do not contain nitrogen, sulfur or a halogen element, which cause coloration, but examples thereof include substituent groups constituted from carbon atoms and hydrogen atoms or from carbon atoms, hydrogen atoms and oxygen atoms, and specific examples thereof include alkyl groups, aryl groups, aralkyl groups, alkenyl groups, alkynyl groups, alkoxy groups, and groups obtained by introducing hydroxyl groups, ether groups and other groups into the groups mentioned above.

In a case where Y is an organic group not containing nitrogen, sulfur or a halogen element, It is particularly preferable for X to be an alkyl group or an optionally substituted aryl group.

In a case where Y is an organic group not containing nitrogen, sulfur or a halogen element or a case where Y is a hydrogen atom, it is preferable for an aryl group of X to be a phenyl group. The phenyl group may have an alkyl group as a substituent group. Examples of this alkyl group include those listed below as alkyl groups of X.

In a case where Y is an organic group not containing nitrogen, sulfur or a halogen element or a case where Y is a hydrogen atom, an alkyl group in X is preferably an alkyl group having 1 to 10 carbon atoms, and more preferably an alkyl group having 1 to 4 carbon atoms. An alkyl group of X may be a straight chain alkyl group, a branched chain alkyl group or a cyclic alkyl group, but a straight chain or branched chain alkyl group is preferred.

The value of n, which indicates the number of substituent groups X in general formulae (1) and (1A), is 0 to 4.

In a case where Y is a hydrogen atom, n is preferably 0 to 3, more preferably 0 to 2, and particularly preferably 0 (no substituent group) or 1.

Moreover, in a case where n is 2 or more, the plurality of substituent groups X may be the same as, or different from, each other.

In cases where one $-CH_2OY$ group is present, the substitution position of X is preferably the ortho position and/or para position relative to the $-CH_2OY$ group.

(Case where Y is a hydrogen atom)

In the case of an aromatic alcohol in which Y in general formula (1) or (1A) is a hydrogen atom, specific examples of benzyl alcohol compounds in which k=1 include benzyl alcohol (that is, phenylmethanol), 4-methylphenylmethanol, 2-methylphenylmethanol, 3-methylphenylmethanol, 4-ethylphenylmethanol, 2-ethylphenylmethanol, 4-isopropylphenylmethanol, 4-tert-butylphenylmethanol, 4-phenylbenzyl alcohol (that is, 4-phenylphenylmethanol), 3-phenylphenylmethanol, 2,3-dimethylphenylmethanol, 2,4-dimethylphenylmethanol, 2-methyl-3-phenylphenylmethanol, 3,5-tert-butylphenylmethanol, 2,4,6-trimethylphenylmethanol and 2,3,5,6-tetramethylphenylmethanol.

Specific examples of benzenedimethanol compounds in which k=2 include 1,4-benzenedimethanol, 1,3-benzenedimethanol and 1,2-benzenedimethanol.

Of these, benzyl alcohol, 4-phenylbenzyl alcohol, 2-methylphenylmethanol, 4-methylphenylmethanol, 4-tert-butylphenylmethanol and 1,4-benzenedimethanol are preferred.

(Case where Y is an organic group)

In a case where Y in general formula (1) or (1A) is an organic group that does not contain nitrogen, sulfur or a halogen element, preferred examples of Y include an alkyl group, an alkenyl group, an alkylcarbonyl group, and optionally substituted arylcarbonyl group, a hydroxyalkyl group, a hydroxyalkyloxyalkyl group, an optionally substituted aryl group, and a benzyl group optionally having a substituent group on the benzene ring.

An alkyl group of Y is preferably an alkyl group having 1 to 8 carbon atoms, and more preferably an alkyl group having 1 to 4 carbon atoms. An alkyl group of Y may be a straight chain alkyl group, a branched chain alkyl group or a cyclic alkyl group, but a straight chain or branched chain alkyl group is preferred.

An alkenyl group of Y is preferably an alkenyl group having 2 to 5 carbon atoms, and is more preferably an allyl group ($-CH_2-CH=CH_2$) .

An alkylcarbonyl group of Y is preferably an alkylcarbonyl group having 2 to 5 carbon atoms ($-C(=O)-(CH_2)_j-CH_3$ (j is an integer between 0 and 3)).

Examples of an arylcarbonyl group of Y include optionally substituted phenylcarbonyl groups ($-C(=O)-C_6H_5$).

An aryl group of Y is preferably a phenyl group. Examples of hydroxyalkyl groups include groups represented by $-(CH_2)_mOH$ (m is an integer between 1 and 4) . Examples of hydroxyalkyloxyalkyl groups include $-CH_2CH_2-O-CH_2CH_2-OH$.

Examples of substituent groups that may be present on a benzene ring of an aryl group, such as a phenyl group, or a benzyl group contained in Y include alkyl groups. Examples of these alkyl groups include those listed above as alkyl groups of X.

Y is preferably an alkyl group such as a methyl group, a benzyl group, a hydroxymethyl group ($-CH_2OH$), a hydroxyethyl group ($-C_2H_4OH$), $-CH_2-CH=CH_2$, $-C(=O)-(CH_2)_j-CH_3$ (j is an integer between 0 and 3) or $-C(=O)-C_6H_5$.

Specific examples of the aromatic compound (C) in which Y is an organic group that does not contain nitrogen, sulfur or a halogen element include dibenzyl ether ($C_6H_5-CH_2-O-CH_2-C_6H_5$), benzyl methyl ether ($C_6H_5-CH_2-O-CH_3$), 2-benzyloxyethanol ($C_6H_5-CH_2-O-C_2H_4OH$), allyl benzyl ether ($C_6H_5-CH_2-O-CH_2-CH=CH_2$), benzyl acetate ($C_6H_5-CH_2-O-C(=O)-CH_3$), benzyl benzoate ($C_6H_5-CH_2-O-C(=O)-C_6H_5$), benzyl butyrate ($C_6H_5-CH_2-O-C(=O)-C_3H_7$) and 1,4-bis(methoxymethyl)benzene ($CH_3-O-CH_2-C_6H_4-CH_2-O-CH_3$). Of these, dibenzyl ether, benzyl methyl ether and 2-benzyloxyethanol are preferred.

It is possible to use one of these aromatic compounds (C) in isolation, or a mixture of two or more types thereof.

In cases where the aromatic compound (C) is contained, the content thereof is preferably 0.001 to 1 parts by mass relative to 100 parts by mass of the transparent thermoplastic resin (A). If the content of the aromatic compound (C) is excessively high, there are concerns that a molded article will become cloudy and that durability against heat and light will deteriorate. This content is more preferably 0.05 to 1 parts by mass, and more preferably 0.1 to 0.5 parts by mass.

[Polyalkylene glycol (D)]

The thermoplastic resin composition of the present invention preferably contains a polyalkylene glycol. Polyalkylene glycol copolymers (CP) having straight chain alkylene ether units (P1) represented by general formula (2) below and branched alkylene ether units (P2) selected from among units represented by general formulae (2A) to (2D) below can also be given as preferred examples of the polyalkylene glycol compound.

[C3]

$$\left[ (CH_2)_t-O \right] \quad \cdots (2)$$

In general formula (2), t denotes an integer between 3 and 6.

[C4]

$$\left[ CR^{31}R^{32}-CR^{33}R^{34}-O \right] \cdots (2A)$$

$$\left[ CR^{31}R^{32}-CR^{33}R^{34}-CR^{35}R^{36}-O \right] \cdots (2B)$$

$$\left[ CR^{31}R^{32}-CR^{33}R^{34}-CR^{35}R^{36}-CR^{37}R^{38}-O \right] \cdots (2C)$$

$$\left[ CR^{31}R^{32}-CR^{33}R^{34}-CR^{35}R^{36}-CR^{37}R^{38}-CR^{39}R^{40}-O \right] \cdots (2D)$$

In general formulae (2A) to (2D), $R^{31}$ to $R^{40}$ are each independently a hydrogen atom or an alkyl group having 1 to 3 carbon atoms. At least one of $R^{31}$ to $R^{40}$ in general formulae (2A) to (2D) is an alkyl group having 1 to 3 carbon atoms.

If glycols are listed as examples of straight chain alkylene ether units (P1) represented by general formula (2) above, triethylene glycol in which t is 3, tetramethylene glycol in which t is 4, pentamethylene glycol in which t is 5 and hexamethylene glycol in which t is 6 are preferred. Trimethylene glycol and tetramethylene glycol are preferred, and tetramethylene glycol is particularly preferred.

Trimethylene glycol can be industrially produced using a method comprising hydroformylation of ethylene oxide so as to obtain 3-hydroxypropionaldehyde and then hydrogenating the 3-hydroxypropionaldehyde, or a method comprising hydrating acrolein so as to obtain 3-hydroxypropionaldehyde and then hydrogenating the 3-hydroxypropionaldehyde using a Ni catalyst. Trimethylene glycol may be produced using a bio-method comprising chemically reducing glycerin, glucose, starch, or the like, using microorganisms.

If glycols are listed as examples of branched chain alkylene ether units represented by general formula (2A), examples thereof include (2-methyl)ethylene glycol (propylene glycol), (2-ethyl)ethylene glycol (butylene glycol) and (2,2-dimethyl)ethylene glycol (neopentyl glycol).

If glycols are listed as examples of branched chain alkylene ether units represented by general formula (2B), examples thereof include (2-methyl)trimethylene glycol, (3-methyl)trimethylene glycol, (2-ethyl)trimethylene glycol, (3-ethyl)trimethylene glycol, (2,2-dimethyl)trimethylene glycol, (2,2-methylethyl)trimethylene glycol, (2,2-diethyl)trimethylene glycol (that is, neopentyl glycol), (3,3-dimethyl)trimethylene glycol, (3,3-methylethyl)trimethylene glycol and (3,3-diethyl)trimethylene glycol.

If glycols are listed as examples of branched chain alkylene ether units represented by general formula (2C), examples thereof include (3-methyl)tetramethylene glycol, (4-methyl)tetramethylene glycol, (3-ethyl)tetramethylene glycol, (4-ethyl)tetramethylene glycol, (3,3-dimethyl)tetramethylene glycol, (3,3-methylethyl)tetramethylene glycol, (3,3-diethyl)tetramethylene glycol, (4,4-dimethyl)tetramethylene glycol, (4,4-methylethyl)tetramethylene glycol and (4,4-diethyl)tetramethylene glycol, with (3-methyl)tetramethylene glycol being preferred.

If glycols are listed as examples of branched chain alkylene ether units represented by general formula (2D), examples thereof include (3-methyl)pentamethylene glycol, (4-methyl)pentamethylene glycol, (5-methyl)pentamethylene glycol, (3-ethyl)pentamethylene glycol, (4-ethyl)pentamethylene glycol, (5-ethyl)pentamethylene glycol, (4,4-dimethyl)pentamethylene glycol, (3,3-methylethyl)pentamethylene glycol, (3,3-diethyl)pentamethylene glycol, (3,3-dimethyl)pentamethylene glycol, (4,4-methylethyl)pentamethylene glycol, (4,4-diethyl)pentamethylene glycol, (5,5-dimethyl)pentamethylene glycol, (5,5-methylethyl)pentamethylene glycol and (5,5-diethyl)pentamethylene glycol.

For the sake of convenience, glycols have been listed above as examples of units represented by general formulae (2A) to (2D) that constitute branched alkylene ether units (P2), but these branched alkylene ether units are not limited to these glycols, and may also be alkylene oxides or polyether-forming derivatives of these.

Preferred examples of the polyalkylene glycol copolymer (CP) include copolymers comprising tetramethylene

ether (tetramethylene glycol) units and units represented by general formula (2A), and copolymers comprising tetramethylene ether (tetramethylene glycol) units and 2-methylethylene ether (propylene glycol) units and/or (2-ethyl)ethylene glycol (butylene glycol) units are particularly preferred. Copolymers comprising tetramethylene ether units and 2,2-dimethyltrimethylene ether units, that is, neopentyl glycol ether units, are also preferred.

Methods for producing a polyalkylene glycol copolymer (CP) having straight chain alkylene ether units (P1) and branched alkylene ether units (P2) are well known, and such a copolymer can generally be produced by subjecting a glycol such as those mentioned above and an alkylene oxide or a polyether-forming derivative thereof to polycondensation using an acid catalyst.

The polyalkylene glycol copolymer (CP) may be a random copolymer or a block copolymer.

It is preferable for terminal groups in the polyalkylene glycol copolymer (CP) to be hydroxyl groups. Even if one terminal or both terminals in the polyalkylene glycol copolymer (CP) in are capped with an alkyl ether, an aryl ether, an aralkyl ether, a fatty acid ester, an aryl ester or the like, this has no effect on performance, and etherified products and esterified products can also be used in the same way.

An alkyl group that constitutes an alkyl ether may be straight chain or branched chain, and examples thereof include alkyl groups having 1 to 22 carbon atoms, such as a methyl group, an ethyl group, a propyl group, a butyl group, an octyl group, a lauryl group and a stearyl group. Preferred examples of alkyl ethers include methyl ethers, ethyl ethers, butyl ethers, lauryl ethers and stearyl ethers of polyalkylene glycols.

Aryl groups that constitute aryl ethers are preferably aryl groups having 6 to 22 carbon atoms, more preferably 6 to 12 carbon atoms, and further preferably 6 to 10 carbon atoms, such as phenyl groups, tolyl groups and naphthyl groups, with phenyl groups and tolyl groups being preferred. Aralkyl groups are preferably aralkyl groups having 7 to 23 carbon atoms, more preferably 7 to 13 carbon atoms, and further preferably 7 to 11 carbon atoms, such as benzyl groups and phenethyl groups, with benzyl groups being particularly preferred.

Fatty acids that constitute fatty acid esters may be straight chain or branched chain, and may be saturated fatty acids or unsaturated fatty acids.

Examples of fatty acids that constitute fatty acid esters include monovalent and divalent fatty acids having 1 to 22 carbon atoms. Examples of saturated monovalent fatty acids include formic acid, acetic acid, propionic acid, butyric acid, valeric acid, caproic acid, enanthic acid, caprylic acid, capric acid, lauric acid, myristic acid, pentadecylic acid, palmitic acid, heptadecylic acid, stearic acid, nonadecanoic acid, arachidic acid and behenic acid. Examples of unsaturated monovalent fatty acids include unsaturated fatty acids such as oleic acid, elaidic acid, linoleic acid, linolenic acid and arachidonic acid. Examples of divalent fatty acids having 10 or more carbon atoms include sebacic acid, undecanedioic acid, dodecanedioic acid, tetradecanedioic acid, thapsia acid, decenedioic acid, undecenedioic acid and dodecenedioic acid.

Aryl groups that constitute aryl esters are preferably aryl groups having 6 to 22 carbon atoms, more preferably 6 to 12 carbon atoms, and further preferably 6 to 10 carbon atoms, such as phenyl groups, tolyl groups and naphthyl groups, with phenyl groups and tolyl groups being preferred. Groups for terminal capping exhibit good compatibility with the polycarbonate resin (A) even in the case of an aralkyl group, and can therefore achieve a similar effect to an aryl group. Aralkyl groups are preferably aralkyl groups having 7 to 23 carbon atoms, more preferably 7 to 13 carbon atoms, and further preferably 7 to 11 carbon atoms, such as benzyl groups and phenethyl groups, with benzyl groups being particularly preferred.

Particularly preferred examples of the polyalkylene glycol copolymer (CP) include copolymers comprising tetramethylene ether units and 2-methylethylene ether units, copolymers comprising tetramethylene ether units and 3-methyltetramethylene ether units and copolymers comprising tetramethylene ether units and 2,2-dimethyltrimethylene ether units. Examples of commercially available products of such polyalkylene glycol copolymers include "Polycerin DCB" produced by NOF Corp., "PTG-L" produced by Hodogaya Chemical Co., Ltd. and "PTXG" produced by Asahi Kasei Fibers Corporation.

A copolymer comprising tetramethylene ether units and 2,2-dimethyltrimethylene ether units can be produced using a method disclosed in JP 2016-125038 A.

Preferred examples of the polyalkylene glycol compound include branched polyalkylene glycols represented by general formula (3A) below and straight chain polyalkylene glycols represented by general formula (3B) below. A branched polyalkylene glycol compound represented by general formula (3A) below or a straight chain polyalkylene glycol compound represented by general formula (3B) below may be a copolymer with another copolymerized component, but is preferably a homopolymer.

[C5]

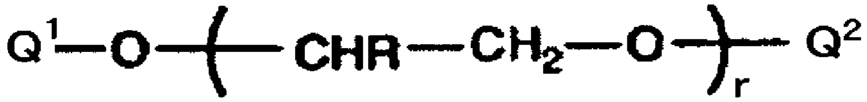

(3 A)

In general formula (3A), R is an alkyl group having 1 to 3 carbon atoms. $Q^1$ and $Q^2$ are each independently a hydrogen atom, an aliphatic acyl group having 1 to 23 carbon atoms or an alkyl group having 1 to 23 carbon atoms. r is an integer between 5 and 400.

[C6]

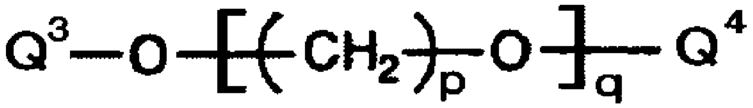

(3 B)

In general formula (3B), $Q^3$ and $Q^4$ are each independently a hydrogen atom, an aliphatic acyl group having 2 to 23 carbon atoms or an alkyl group having 1 to 22 carbon atoms. p is an integer between 2 and 6, and q is an integer between 6 and 100.

In general formula (3A), the value of the integer r (degree of polymerization) is 5 to 400, preferably 10 to 200, more preferably 15 to 100, and particularly preferably 20 to 50. In cases where the degree of polymerization r is less than 5, a large amount of gas is produced at the time of molding, and there is a possibility that molding defects caused by gas will occur, such as unfilled parts, gas burning and transfer defects. In cases where the degree of polymerization r exceeds 400, there are concerns that the advantageous effect of improving the color hue of a pellet of the present invention cannot be adequately achieved.

Preferred branched polyalkylene glycol compounds are polypropylene glycol (poly(2-methyl)ethylene glycol), in which $Q^1$ and $Q^2$ are hydrogen atoms and R is a methyl group in general formula (3A), and polybutylene glycol (poly(2-ethyl)ethylene glycol), in which $Q^1$ and $Q^2$ are hydrogen atoms and R is an ethyl group in general formula (3A), and polybutylene glycol (poly(2-ethyl)ethylene glycol) is particularly preferred.

In general formula (3B), the value of the integer q (degree of polymerization) is 6 to 100, preferably 8 to 90, and more preferably 10 to 80. If the degree of polymerization q is less than 6, gas is produced at the time of molding, which is not desirable. If the degree of polymerization q exceeds 100, compatibility deteriorates, which is not desirable.

Preferred examples of straight chain polyalkylene glycol compounds include polyethylene glycol, in which $Q^3$ $Q^4$ in general formula (3B) are hydrogen atoms and the value of p is 2, polytrimethylene glycol, in which the value of p is 3, polytetramethylene glycol, in which the value of p is 4, polypentamethylene glycol, in which the value of p is 5, and polyhexamethylene glycol, in which the value of p is 6, and polytrimethylene glycol, polytetramethylene glycol and esters of these are more preferred.

Even if one terminal or both terminals of a polyalkylene glycol compound are capped with a fatty acid or an alcohol, this has no effect on performance, and an esterified or etherified fatty acid can be used in the same way. Therefore, $Q^1$ to $Q^4$ in general formulae (3A) and (3B) may be aliphatic acyl groups or alkyl groups having 1 to 23 carbon atoms.

A straight chain or branched chain fatty acid ester can be used as an esterified fatty acid. Fatty acids that constitute fatty acid esters may be saturated fatty acids or unsaturated fatty acids. It is possible to use a compound in which some hydrogen atoms are replaced with substituent groups such as hydroxyl groups.

Examples of fatty acids that constitute fatty acid esters include monovalent and divalent fatty acids having 1 to 23 carbon atoms. Specific examples of saturated monovalent fatty acids include formic acid, acetic acid, propionic acid, butyric acid, valeric acid, caproic acid, enanthic acid, caprylic acid, capric acid, lauric acid, myristic acid, pentadecylic acid, palmitic acid, heptadecylic acid, stearic acid, nonadecanoic acid, arachidic acid and behenic acid. Specific examples of unsaturated monovalent fatty acids include unsaturated fatty acids such as oleic acid, elaidic acid, linoleic acid, linolenic acid and arachidonic acid. Specific examples of divalent fatty acids having 10 or more carbon atoms include sebacic acid, undecanedioic acid, dodecanedioic acid, tetradecanedioic acid, thapsia acid, decenedioic acid, undecenedioic acid

and dodecenedioic acid.

It is possible to use one fatty acid or a combination of two or more types thereof. Fatty acids include fatty acids having one or more hydroxyl groups in the molecule.

Specific preferred examples of fatty acid esters of branched polyalkylene glycols include polypropylene glycol stearate, in which R is a methyl group and $Q^1$ and $Q^2$ are aliphatic acyl groups having 18 carbon atoms in general formula (3A), and polypropylene glycol behenate, in which R is a methyl group and $Q^1$ and $Q^2$ are aliphatic acyl groups having 22 carbon atoms in general formula (3A). Specific preferred examples of fatty acid esters of straight chain polyalkylene glycols include polyalkylene glycol monopalmitic acid esters, polyalkylene glycol dipalmitic acid esters, polyalkylene glycol monostearic acid esters, polyalkylene glycol distearic acid esters, polyalkylene glycol (monopalmitic acid·monostearic acid) esters and polyalkylene glycol behenate.

An alkyl group that constitutes an alkyl ether of a polyalkylene glycol may be straight chain or branched chain, and examples thereof include alkyl groups having 1 to 23 carbon atoms, such as a methyl group, an ethyl group, a propyl group, a butyl group, an octyl group, a lauryl group and a stearyl group. Preferred examples of polyalkylene glycol compounds include alkyl methyl ethers, ethyl ethers, butyl ethers, lauryl ethers and stearyl ethers of polyalkylene glycols.

Examples of commercially available branched polyalkylene glycol compounds represented by general formula (3A) above include the products "Uniol D-1000" and "Uniol PB-1000" available from NOF Corp.

The number average molecular weights of polyalkylene glycol compounds such as the polyalkylene glycol copolymer (CP), the branched polyalkylene glycol compound represented by general formula (3A) and the straight chain polyalkylene glycol compound represented by the general formula (3B) are preferably 200 to 5000, and are more preferably 300 or more, and further preferably 500 or more, and are more preferably 4000 or less, further preferably 3000 or less, particularly preferably 2000 or less, especially preferably less than 1000, and most preferably 800 or less. If the number average molecular weight exceeds the upper limit mentioned above, compatibility tends to decrease. If the number average molecular weight is lower than the lower limit mentioned above, gas tends to be produced at the time of molding. The number average molecular weight of the polyalkylene glycol compound is the number average molecular weight calculated on the basis of the hydroxyl value measured in accordance with JIS K1577.

It is possible to use one of these polyalkylene glycol compounds in isolation, or a combination of two or more types thereof.

In cases where the thermoplastic resin composition of the present invention contains a polyalkylene glycol compound, the content thereof is preferably 0.001 to 1.0 parts by mass, more preferably 0.01 to 0.8 parts by mass, and particularly preferably 0.1 to 0.5 parts by mass, relative to 100 parts by mass of the transparent thermoplastic resin (A). If the content of the polyalkylene glycol compound is lower or higher than the limits mentioned above, the color hue of an obtained molded article tends to deteriorate.

<Epoxy compound (E) / oxetane compound (F)>

It is preferable for the thermoplastic resin composition of the present invention to contain an epoxy compound and/or an oxetane compound. By incorporating the epoxy compound and/or oxetane compound together with the polyalkylene glycol polymer (D), it is possible to further improve thermal discoloration resistance.

<Epoxy compound (E)>

A compound having one or more epoxy groups per molecule can be used as the epoxy compound. Specifically, phenyl glycidyl ether, allyl glycidyl ether, t-butylphenyl glycidyl ether, 3,4-epoxycyclohexylmethyl-3',4'-epoxycyclohexyl carboxylate, 3,4-epoxy-6-methylcyclohexylmethyl-3',4'-epoxy-6'-methylcyclohexyl carboxylate, 2,3-epoxycyclohexylmethyl-3',4'-epoxycyclohexyl carboxylate, 4-(3,4-epoxy-5-methylcyclohexyl)butyl-3',4'-epoxycyclohexyl carboxylate, 3,4-epoxycyclohexylethylene oxide, cyclohexylmethyl 3,4-epoxycyclohexyl carboxylate, 3,4-epoxy-6-methylcyclohexylmethyl-6'-methylcyclohexyl carboxylate, bisphenol A diglycidyl ether, tetrabromobisphenol A glycidyl ether, phthalic acid diglycidyl ester, hexahydrophthalic acid diglycidyl ester, bis-epoxydicyclopentadienyl ether, bis-epoxyethylene glycol, bis-epoxycyclohexyl adipate, butadiene diepoxide, tetraphenylethylene epoxide, octyl epoxy tallate, epoxidized polybutadiene, 3,4-dimethyl-1,2-epoxycyclohexane, 3,5-dimethyl-1,2-epoxycyclohexane, 3-methyl-5-t-butyl-1,2-epoxycyclohexane, octadecyl-2,2-dimethyl-3,4-epoxycyclohexyl carboxylate, N-butyl-2,2-dimethyl-3,4-epoxycyclohexyl carboxylate, cyclohexyl-2-methyl-3,4-epoxycyclohexyl carboxylate, N-butyl-2-isopropyl-3,4-epoxy-5-methylcyclohexyl carboxylate, octadecyl-3,4-epoxycyclohexyl carboxylate, 2-ethylhexyl-3',4'-epoxycyclohexyl carboxylate, 4,6-dimethyl-2,3-epoxycyclohexyl-3',4'-epoxycyclohexyl carboxylate, 4,5-epoxytetrahydrophthalic acid anhydride, 3-t-butyl-4,5-epoxytetrahydrophthalic acid anhydride, diethyl-4,5-epoxy-cis-1,2-cyclohexyl dicarboxylate, di-n-butyl-3-t-butyl-4,5-epoxy-cis-1,2-cyclohexyl dicarboxylate, epoxidized soy bean oil, epoxidized linseed oil, and the like, can be advantageously used.

Of these, alicyclic epoxy compounds can be advantageously used, and 3,4-epoxycyclohexylmethyl-3',4'-epoxycyclohexyl carboxylate is particularly preferred.

In addition, a polyalkylene glycol derivative having an epoxy group at one terminal or both terminals can be advantageously used. A polyalkylene glycol having an epoxy group at both terminals is particularly preferred.

Preferred examples of polyalkylene glycol derivatives having an epoxy group in the structure include polyalkylene glycol derivatives such as polyethylene glycol diglycidyl ether, poly(2-methyl)ethylene glycol diglycidyl ether, poly(2-ethyl)ethylene glycol diglycidyl ether, polytetramethylene glycol diglycidyl ether, polyethylene glycol-poly(2-methyl)ethylene glycol diglycidyl ether, polytetramethylene glycol-poly(2-methyl)ethylene glycol diglycidyl ether and polytetramethylene glycol-poly(2-ethyl)ethylene glycol diglycidyl ether.

It is possible to use one of these epoxy compounds in isolation, or a combination of two or more types thereof.

<Oxetane compound (F)>

Any compound having one or more oxetane groups in the molecule can be used as the oxetane compound, and monooxetane compounds having one oxetane group in the molecule and bifunctional or higher polyoxetane compounds having two or more oxetane groups in the molecule can be used.

Preferred examples of monooxetane compounds include compounds represented by general formulae (I-a) and (I-b) below. Preferred examples of polyoxetane compounds include dioxetane compounds having two oxetane groups in the molecule, which are represented by general formula (II) below.

[C7]

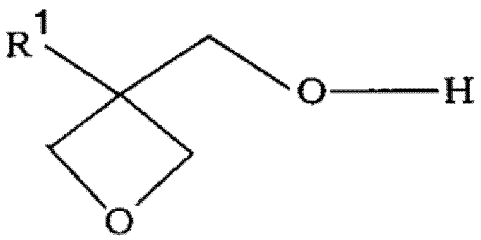

(I- a)

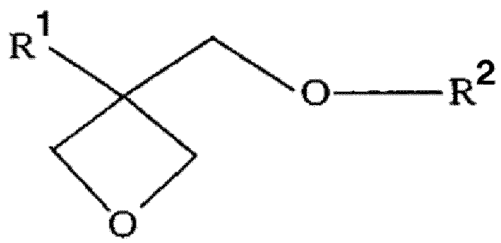

(I- b)

[C8]

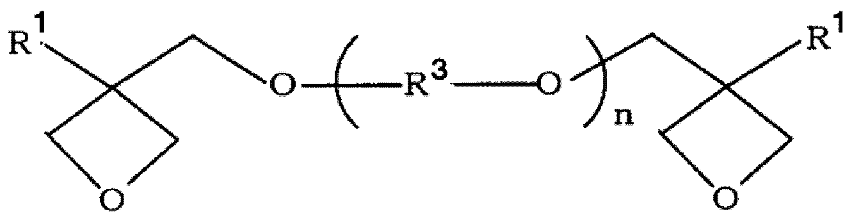

(I I)

(In the formulae, $R^1$ denotes an alkyl group, $R^2$ denotes an alkyl group or a phenyl group, $R^3$ denotes a divalent organic group that may have an aromatic ring, and the value of n is 0 or 1.)

In general formulae (I-a), (I-b) and (II) above, $R^1$ is an alkyl group, but is preferably an alkyl group having 1 to 6 carbon atoms, is more preferably a methyl group or an ethyl group, and is particularly preferably an ethyl group.

In general formula (I-b) above, $R^2$ is an alkyl group or a phenyl group, but is preferably an alkyl group having 2 to 10 carbon atoms, and may be a chain-like alkyl group, a branched alkyl group or an alicyclic alkyl group, and may be a chain-like or branched alkyl group having an ether bond (an etheric oxygen atom) in the alkyl chain. Specific examples of $R^2$ include an ethyl group, a propyl group, a butyl group, a pentyl group, a hexyl group, a heptyl group, an octyl group, a 2-ethylhexyl group, a nonyl group, a decyl group, a 3-oxypentyl group, a cyclohexyl group and a phenyl group. Of these, $R^2$ is preferably a 2-ethylhexyl group, a phenyl group or a cyclohexyl group.

Preferred specific examples of compounds represented by general formula (I-a) include 3-hydroxymethyl-3-methyloxetane, 3-hydroxymethyl-3-ethyloxetane, 3-hydroxymethyl-3-propyloxetane, 3-hydroxymethyl-3-n-butyloxetane and 3-hydroxymethyl-3-propyloxetane. Of these, 3-hydroxymethyl-3-methyloxetane, 3-hydroxymethyl-3-ethyloxetane, and the like, are particularly preferred. 3-ethyl-3-(2-ethylhexyloxymethyl)oxetane, or the like, is particularly preferred as a specific example of the compound represented by general formula (I-b).

In general formula (II) above, $R^3$ is a divalent organic group that may have an aromatic ring, but examples thereof include straight chain or branched alkylene groups having 1 to 12 carbon atoms, such as an ethylene group, a propylene group, a butylene group, a neopentylene group, a n-pentamethylene group or a n-hexamethylene group; a phenylene group; a divalent group represented by the formula $-CH_2-Ph-CH_2-$ or $-CH_2-Ph-Ph-CH_2-$ (here, Ph denotes a phenyl group); a hydrogenated bisphenol A residue; a hydrogenated bisphenol F residue; a hydrogenated bisphenol Z residue; a cyclohexanedimethanol residue and a tricyclodecanedimethanol residue.

Particularly preferred specific examples of compounds represented by general formula (II) include bis(3-methyl-3-oxetanylmethyl) ether, bis(3-ethyl-3-oxetanylmethyl) ether, bis(3-propyl-3-oxetanylmethyl) ether, bis(3-butyl-3-oxetanylmethyl) ether, 1,4-bis[(3-ethyl-3-oxetanylmethoxy)methyl]benzene, 3-ethyl-3{[(3-ethyloxetan-3-yl)methoxy]methyl} oxetane, 4,4'-bis[(3-ethyl-3-oxetanyl)methoxymethyl]biphenyl and 1,4-bis[(3-ethyl-3-oxetanyl)methoxymethyl]benzene.

It is possible to use one of these oxetane compounds in isolation, or a combination of two or more types thereof.

The content of the epoxy compound and/or oxetane compound (or the total content thereof in cases where the epoxy compound and the oxetane compound are both contained) is, relative to 100 parts by mass of the polycarbonate resin (A), 0.0005 to 0.2 parts by mass, and is more preferably 0.001 parts by mass or more, further preferably 0.003 parts by mass or more, and particularly preferably 0.005 parts by mass or more, and is more preferably 0.15 parts by mass or less, further preferably 0.1 parts by mass or less, and particularly preferably 0.05 parts by mass or less. If the content of the epoxy compound and/or oxetane compound is less than 0.0005 parts by mass, color hue and thermal discoloration resistance tend to be inadequate, and if the content of the epoxy compound and/or oxetane compound exceeds 0.2 parts by mass, thermal discoloration resistance tends to deteriorate and color hue and wet heat stability also tend to deteriorate.

[Flame retardant (G)]

The thermoplastic resin composition of the present invention preferably contains a flame retardant, and the flame retardant is preferably alkali metal salt of an organic sulfonic acid from the perspective of transparency. By incorporating an alkali metal salt of an organic sulfonic acid, it is possible to facilitate formation of a carbide layer when the resin composition is combusted and further increase flame retardancy, and it is also possible to favorably maintain mechanical properties such as impact resistance and properties such as heat resistance and electrical characteristics.

Examples of metals in alkali metal salts of organic sulfonic acids include lithium (Li), sodium (Na), potassium (K), rubidium (Rb) and cesium (Cs), but of these, sodium, potassium and cesium are most preferred.

Preferred examples of alkali metal salts of organic sulfonic acids include alkali metal salts of fluorinated aliphatic sulfonic acids and aromatic sulfonic acids. Preferred specific examples of these include alkali metal salts of fluorinated aliphatic sulfonic acids having at least one C-F bond in the molecule, such as potassium perfluorobutane sulfonate, lithium perfluorobutane sulfonate, sodium perfluorobutane sulfonate, cesium perfluorobutane sulfonate, potassium trifluoromethane sulfonate, lithium trifluoromethane sulfonate, sodium trifluoromethane sulfonate and cesium trifluoromethane sulfonate; and alkali metal salts of aromatic sulfonic acids having at least one type of aromatic group in the molecule, such as dipotassium diphenylsulfone-3,3'-disulfonate, potassium diphenylsulfone-3-sulfonate, sodium benzene sulfonate, sodium (poly)styrene sulfonate, sodium para-toluene sulfonate, sodium (branched) dodecylbenzene sulfonate, sodium trichlorobenzene sulfonate, potassium benzene sulfonate, potassium styrene sulfonate, potassium (poly)styrene sulfonate, potassium para-toluene sulfonate, potassium (branched) dodecylbenzene sulfonate, potassium trichlorobenzene sulfonate, cesium benzene sulfonate, cesium (poly)styrene sulfonate, cesium para-toluene sulfonate, cesium (branched) dodecylbenzene sulfonate and cesium trichlorobenzene sulfonate.

Of the examples given above, alkali metal salts of fluorinated aliphatic sulfonic acids are particularly preferred, alkali metal salts of perfluoroalkane sulfonic acids are more preferred, and potassium perfluorobutane sulfonate in particular is especially preferred.

The alkali metal salt of an organic sulfonic acid may be a single compound or an arbitrary combination of two or more different compounds combined at arbitrary proportions.

In cases where an alkali metal salt of an organic sulfonic acid is contained, the content thereof is preferably at least 0.01 parts by mass and less than 0.2 parts by mass, more preferably 0.05 to 0.15 parts by mass, and further preferably 0.05 to 0.1 parts by mass, relative to 100 parts by mass of the transparent thermoplastic resin (A). If the content of the alkali metal salt of an organic sulfonic acid is less than the lower limit mentioned above, the advantageous effect of improving flame retardancy cannot be adequately achieved, and if this content exceeds the upper limit mentioned above, transparency decreases, which is not desirable.

[Ultraviolet absorber (H)]

The thermoplastic resin composition of the present invention preferably further contains an ultraviolet absorber.

Examples of ultraviolet absorbers include inorganic ultraviolet absorbers such as cerium oxide and zinc oxide; and organic ultraviolet absorbers such as benzotriazole compounds, benzophenone compounds, salicylate compounds, cyanoacrylate compounds, triazine compounds, oxanilide compounds, malonic acid ester compounds and hindered amine compounds. Of these, organic ultraviolet absorbers are preferred, and benzotriazole compounds are more preferred. By selecting an organic ultraviolet absorber, the transparency and mechanical properties of the resin composition of the present invention are improved.

Specific examples of benzotriazole compounds include 2-(2'-hydroxy-5'-methylphenyl)benzotriazole, 2-[2'-hydroxy-3',5'-bis($\alpha$,$\alpha$-dimethylbenzyl)phenyl]-benzotriazole, 2-(2'-hydroxy-3',5'-di-tert-butyl-phenyl)-benzotriazole, 2-(2'-hydroxy-3'-tert-butyl-5'-methylphenyl)-5-chlorobenzotriazole, 2-(2'-hydroxy-3',5'-di-tert-butyl-phenyl)-5-chlorobenzotriazole, 2-(2'-hydroxy-3',5'-di-tert-amyl)-benzotriazole, 2-(2'-hydroxy-5'-tert-octylphenyl)benzotriazole and 2,2'-methylene-bis[4-(1,1,3,3-tetramethylbutyl)-6-(2H-benzotriazol-2-yl)phenol], and of these, 2-(2'-hydroxy-5'-tert-octylphenyl)benzotriazole and 2,2'-methylene-bis[4-(1,1,3,3-tetramethylbutyl)-6-(2H-benzotriazol-2-yl)phenol] are preferred, and 2-(2'-hydroxy-5'-tert-octylphenyl)benzotriazole is particularly preferred. Specific examples of such benzotriazole compounds include "Seesorb 701", "Seesorb 705", "Seesorb 703", "Seesorb 702", "Seesorb 704" and "Seesorb 709" manufactured by Shipro Kasei Kaisha, Ltd., "Biosorb 520", "Biosorb 582", "Biosorb 580" and "Biosorb 583" manufactured by Kyodo Chemical Co., Ltd., "Kemisorb 71" and "Kemisorb 72" manufactured by Chemipro Kasei Kaisha, Ltd., "Cyasorb UV5411" manufactured by Cytec Industries, "LA-32", "LA-38", "LA-36", "LA-34" and "LA-31" manufactured by Adeka and "Tinuvin P", "Tinuvin 234", "Tinuvin 326", "Tinuvin 327" and "Tinuvin 328" manufactured by BASF.

Specific examples of benzophenone compounds include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-n-dodecyloxbenzophenone, bis(5-benzoyl-4-hydroxy-2-methoxyphenyl)methane, 2,2'-dihydroxy-4-methoxybenzophenone and 2,2'-dihydroxy-4,4'-dimethoxybenzophenone, and specific examples of such benzophenone compounds include "Seesorb 100", "Seesorb 101", "Seesorb 101S", "Seesorb 102" and "Seesorb 103" produced by Shipro Kasei Kaisha, Ltd.; "Biosorb 100", "Biosorb 110" and "Biosorb 130" produced by Kyodo Chemical Co., Ltd.; "Kemisorb 10", "Kemisorb 11", "Kemisorb 11S", "Kemisorb 12", "Kemisorb 13" and "Kemisorb 111" produced by Chemipro Kasei Kaisha, Ltd.; "Uvinul 400" reduced by BASF; "Uvinul M-40" produced by BASF; "Uvinul MS-40" produced by BASF; "Cyasorb UV9", "Cyasorb UV284", "Cyasorb UV531" and "Cyasorb UV24" produced by Cytec Industries, Inc.; and "Adekastab 1413" and "Adekastab LA-51" produced by Adeka Corporation.

Specific examples of salicylate compounds include phenyl salicylate and 4-tert-butylphenyl salicylate, and specific examples of such salicylate compounds include "Seesorb 201" and "Seesorb 202" produced by Shipro Kasei Kaisha, Ltd.; and "Kemisorb 21" and "Kemisorb 22" produced by Chemipro Kasei Kaisha, Ltd.

Specific examples of cyanoacrylate compounds include ethyl-2-cyano-3,3-diphenyl acrylate and 2-ethylhexyl-2-cyano-3,3-diphenyl acrylate, and specific examples of such cyanoacrylate compounds include "Seesorb 501" produced by Shipro Kasei Kaisha, Ltd.; "Biosorb 910" produced by Kyodo Chemical Co., Ltd.; "Uvisolator 300" produced by Daiichi Kasei Co., Ltd.; and "Uvinul N-35" and "Uvinul N-539" produced by BASF.

A specific example of an oxanilide compound is 2-ethoxy-2'-ethyloxalinic acid bisanilide, and a specific example of such an oxanilide compound is "Sanduvor VSU" produced by Clariant.

2-(alkylidene)malonic acid ester compounds are preferred as the malonic acid ester compound, and 2-(1-arylalkylidene)malonic acid ester compounds are more preferred. Specific examples of such malonic acid ester compounds include "PR-25" produced by Clariant Japan; and "B-CAP" produced by BASF.

In cases where the thermoplastic resin composition of the present invention contains an ultraviolet absorber, the content thereof is, relative to 100 parts by mass of the transparent thermoplastic resin (A), generally 0.05 parts by mass or more and preferably 0.1 parts by mass or more, and is generally 1 part by mass or less and preferably 0.5 part by mass or less. If the content of the ultraviolet absorber is lower than the lower limit of the numerical range mentioned above, the weathering resistance improvement effect may be inadequate, and if the content of the ultraviolet absorber exceeds the upper limit of the numerical range mentioned above, mold deposits and the like occur and mold contamination can occur.

Moreover, it is possible to incorporate one type of ultraviolet absorber or an arbitrary combination of two or more types thereof combined at arbitrary proportions.

[Stabilizer (J)]

The thermoplastic resin composition of the present invention preferably contains a phosphorus-containing stabilizer and/or a phenolic antioxidant.

By incorporating a phosphorus-containing stabilizer, it is possible to improve the thermal stability, thermal

discoloration resistance, weathering resistance, and so on, of the resin composition. Any publicly known phosphorus-containing stabilizer can be used as the phosphorus-containing stabilizer. Specific examples thereof include oxoacids of phosphorus, such as phosphoric acid, phosphonic acid, phosphorous acid, phosphinic acid and polyphosphoric acid; acidic metal pyrophosphate salts, such as acidic sodium pyrophosphate, acidic potassium pyrophosphate and acidic calcium pyrophosphate; phosphate salts of group 1 or group 2B metals, such as potassium phosphate, sodium phosphate, cesium phosphate and zinc phosphate; organic phosphate compounds, organic phosphite compounds and organic phosphonite compounds, but organic phosphite compounds are particularly preferred.

Examples of organic phosphite compounds include triphenyl phosphite, tris(monononylphenyl) phosphite, tris(monononyl/dinonyl-phenyl) phosphite, tris(2,4-di-tert-butylphenyl) phosphite, monooctyl diphenyl phosphite, dioctyl monophenyl phosphite, monodecyl diphenyl phosphite, didecyl monophenyl phosphite, tridecyl phosphite, trilauryl phosphite, tristearyl phosphite, 2,2-methylene-bis(4,6-di-tert-butylphenyl)octyl phosphite. Specific examples of such organic phosphite compounds include "Adekastab 1178", "Adekastab 2112" and "Adekastab HP-10" manufactured by Adeka, "JP-351", "JP-360" and "JP-3CP" manufactured by Johoku Chemical Co., Ltd., and "Irgafos 168" manufactured by BASF. Moreover, it is possible to incorporate one phosphorus-containing stabilizer or an arbitrary combination of two or more types thereof combined at arbitrary proportions.

The content of the phosphorus-containing stabilizer is generally 0.005 parts by mass or more, preferably 0.01 parts by mass or more and more preferably 0.03 parts by mass or more, and is generally 0.5 parts by mass or less, and preferably 0.4 parts by mass or less, relative to 100 parts by mass of the transparent thermoplastic resin (A). If the content of the phosphorus-containing stabilizer is lower than the lower limit of the range mentioned above, the thermal stabilizing effect may be insufficient, and in cases where the content of the phosphorus-containing stabilizer is higher than the upper limit of the range mentioned above, the advantageous effect achieved by the stabilizer reaches its limit, which may lead to a deterioration in economy.

Examples of the phenolic antioxidant include hindered phenolic antioxidants. Specific examples thereof include pentaerythritol tetrakis[3-(3,5-di-tert-butyl-4-hydroxyphenyl) propionate], octadecyl-3-(3,5-di-tert-butyl-4-hydroxyphenyl) propionate, thiodiethylene-bis[3-(3,5-di-tert-butyl-4-hydroxyphenyl) propionate], N,N'-hexane-1,6-diyl- bis[3-(3,5-di-tert-butyl-4-hydroxyphenylpropionamide), 2,4-dimethyl-6-(1-methylpentadecyl)phenol, diethyl[[3,5-bis(1,1-dimethylethyl)-4-hydroxyphenyl]methyl]phosphoate, 3,3',3",5,5',5"-hexa-tert-butyl-a,a',a"-(mesitylene-2,4,6-triyl)tri-p-cresol, 4,6-bis(octylthiomethyl)-o-cresol, ethylene-bis(oxyethylene)-bis[3-(5-tert-butyl-4-hydroxy-m-tolyl) propionate], hexamethylene-bis[3-(3,5-di-tert-butyl-4-hydroxyphenyl) propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazine-2-ylamino)phenol, 2-[1-(2-hydroxy-3,5-di-tert-pentylphenyl)ethyl]-4,6-di-tertpentylphenyl acrylate.

Of these, pentaerythritol tetrakis[3-(3,5-di-tert-butyl-4-hydroxyphenyl)propionate] and octadecyl-3-(3,5-di-tert-butyl-4-hydroxyphenyl)propionate are preferred. Specific examples of such phenolic antioxidants include "Irganox 1010" and "Irganox 1076" produced by BASF and "Adekastab AO-50" and "Adekastab AO-60" produced by Adeka Corporation.

Moreover, it is possible to incorporate one phenolic antioxidant or an arbitrary combination of two or more types thereof combined at arbitrary proportions.

The content of the phenolic antioxidant is generally 0.005 parts by mass or more, and preferably 0.01 parts by mass or more, and is generally 0.5 parts by mass or less, preferably 0.3 parts by mass or less, and more preferably 0.2 parts by mass or less, relative to 100 parts by mass of the transparent thermoplastic resin (A). In cases where the content of the phenolic antioxidant is lower than the lower limit of the range mentioned above, the advantageous effect of the phenolic antioxidant may be insufficient, and in cases where the content of the phenolic antioxidant is higher than the upper limit of the range mentioned above, the advantageous effect achieved by the phenolic antioxidant reaches its limit, which may lead to a deterioration in economy.

[Mold-release agent (K)]

In addition, the thermoplastic resin composition of the present invention preferably contains a mold-release agent (a lubricant). Examples of mold-release agents include aliphatic carboxylic acids, esters of aliphatic carboxylic acids and alcohols, aliphatic hydrocarbon compounds having a number average molecular weight of 200 to 15,000 and polysiloxane-containing silicone oils.

It is possible to use a saturated or unsaturated aliphatic monohydric, dihydric or trihydric carboxylic acid as the aliphatic carboxylic acid. Here, aliphatic carboxylic acids also include alicyclic carboxylic acids. Of these, preferred aliphatic carboxylic acids are monohydric and dihydric carboxylic acids having 6 to 36 carbon atoms, with saturated aliphatic monohydric carboxylic acids having 6 to 36 carbon atoms being more preferred. Specific examples of such aliphatic carboxylic acids include palmitic acid, stearic acid, caproic acid, capric acid, lauric acid, arachic acid, behenic acid, lignoceric acid, cerotic acid, melissic acid, tetratriacontanoic acid, montanic acid, adipic acid and azelaic acid.

It is possible to use the same aliphatic carboxylic acids as those mentioned above as the aliphatic carboxylic acid in the ester of an aliphatic carboxylic acid and an alcohol. Meanwhile, examples of alcohols include saturated or

unsaturated monohydric or polyhydric alcohols. These alcohols may have substituent groups such as fluorine atoms or aryl groups. Of these, saturated monohydric or polyhydric alcohols having 30 or fewer carbon atoms are preferred, and saturated aliphatic monohydric alcohols and saturated aliphatic polyhydric alcohols having 30 or fewer carbon atoms are more preferred. Moreover, the term aliphatic is used as a term that also encompasses alicyclic compounds.

Specific examples of such alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, di(trimethylolpropane) and dipentaerythritol.

Moreover, the esters mentioned above may contain aliphatic carboxylic acids and/or alcohols as impurities. In addition, the esters mentioned above may be single substances, but may also be mixtures of a plurality of compounds. Furthermore, the aliphatic carboxylic acid and alcohol that bond to each other to form the ester may each be a single compound or a combination of two or more arbitrary types thereof combined at arbitrary proportions.

Specific examples of esters of aliphatic carboxylic acids and alcohols include bees wax (a mixture containing mainly myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate and pentaerythritol tetrastearate.

Examples of aliphatic hydrocarbons having a number average molecular weights of 200 to 15,000 include liquid paraffins, paraffin waxes, microcrystalline waxes, polyethylene waxes, Fischer-Tropsch Waxes and $\alpha$-olefin oligomers having 3 to 12 carbon atoms. Moreover, aliphatic hydrocarbons also include alicyclic hydrocarbons. In addition, these hydrocarbons may be partially oxidized.

Of these, paraffin waxes, polyethylene waxes and partially oxidized polyethylene waxes are preferred, and paraffin waxes and polyethylene waxes are more preferred.

In addition, the number average molecular weight of the aliphatic hydrocarbons mentioned above is preferably 5000 or less.

Moreover, the aliphatic hydrocarbon may be a single substance or a mixture of aliphatic hydrocarbons having a variety of constituent components and molecular weights, but it is possible to use a mixture in which the primary component has a number average molecular weight that falls within the range mentioned above.

Examples of polysiloxane-containing silicone oils include dimethylsilicone oils, methylphenylsilicone oils, diphenylsilicone oils and fluorinated alkylsilicones.

Moreover, it is possible to incorporate one of the mold-release agents mentioned above or an arbitrary combination of two or more types thereof combined at arbitrary proportions.

The content of the mold-release agent is generally 0.001 parts by mass or more and preferably 0.01 parts by mass or more, and is generally 2 parts by mass or less and preferably 1 part by mass or less, relative to 100 parts by mass of the transparent thermoplastic resin (A). If the content of the mold release agent is no higher than the lower limit of the numerical range mentioned above, the mold release effect may be insufficient, and if the content of the mold release agent exceeds the upper limit of the numerical range mentioned above, resistance to hydrolysis may deteriorate and mold contamination may occur during injection molding.

[Coloring agent (L)]

The thermoplastic resin composition of the present invention preferably contains a dye or a pigment. The dye or pigment is preferably a bluing dye that develops a blue or violet color upon absorption of orange or yellow light rays.

Preferred bluing dyes include Solvent Blue 97 and Solvent Violet 36. A specific example of a dye having the common name Solvent Blue 97 is the product "Macrolex Blue RR" produced by Lanxess. A specific example of a dye having the common name Solvent Violet 36 is the product "Macrolex Violet 3R" produced by Lanxess.

In cases where a bluing dye is contained, the content thereof is preferably 0.001 to 0.1 ppm by mass in the thermoplastic resin composition.

[Other components]

The thermoplastic resin composition of the present invention may, if necessary, contain components other than those mentioned above as long as the desired physical properties are not significantly impaired. Examples of other components include a variety of resin additives. Moreover, it is possible to incorporate one of these other components or an arbitrary combination of two or more types thereof combined at arbitrary proportions.

<Resin additives>

Examples of resin additives include auxiliary flame retardants, fluorescent brightening agents, impact resistance-improving agents, anti-static agents, anti-fogging agents, anti-blocking agents, fluidity-improving agents, plasticizers,

dispersing agents, compatibilizers and antimicrobial agents. Moreover, it is possible to incorporate one type of resin additive or an arbitrary combination of two or more types thereof combined at arbitrary proportions.

For example, ionic liquids, such as dodecylbenzene sulfonic acid salts and nitrogen onium salts of perfluoroalkyl sulfonyl derivatives, diglycerol monolaurate, and the like, can be advantageously used as anti-static agents. The blending quantity of the anti-static agent is preferably 0.1 to 5 parts by mass relative to 100 parts by mass of the transparent thermoplastic resin (A).

[Production of thermoplastic resin composition]

The method for producing the thermoplastic resin composition of the present invention is not limited, and well-known methods for producing thermoplastic resin compositions can be widely used.

A specific example is a method comprising pre-mixing the transparent thermoplastic resin (A), the spherical fine particles (B) and other components to be blended as required in any of a variety of mixing machines, such as a tumbler or Henschel mixer, and then melt kneading using a mixer such as a Banbury mixer, a roller, a Brabender, a uniaxial kneading extruder, a biaxial kneading extruder, or a kneader. Moreover, the spherical fine particles (B) are preferably introduced from a side feeder.

It is also possible to produce the thermoplastic resin composition by not pre-mixing the components or pre-mixing only some of the components, and then supplying to an extruder by means of a feeder and carrying out melt kneading. It is also possible to produce the thermoplastic resin composition by forming a master batch from a resin composition obtained by pre-mixing some of the components, supplying these premixed components to an extruder and melt kneading, then mixing this master batch with the remaining components and melt kneading.

In addition, it is possible to mix this master batch with a resin pellet that serves as a substrate and then immediately inject the obtained mixture into a molding machine so as to produce a molded article. In addition, in cases where a component that is difficult to disperse is to be mixed, it is possible to dissolve or disperse the component that is difficult to disperse in a solvent such as water or an organic solvent in advance and knead this solution or dispersion, thereby increasing dispersibility.

[Molded article]

The thermoplastic resin composition of the present invention is molded to give a molded article.

The method for producing a molded article can be any molding method commonly used for thermoplastic resin compositions. Examples thereof include injection molding methods, ultra-high speed injection molding methods, injection compression molding methods, two-color molding methods, blow molding methods such as gas-assisted methods, molding methods that use heat insulating molds, molding methods that use rapidly heated molds, foaming molding methods (including supercritical fluids), insert molding methods, IMC (in-mold coating) molding methods, extrusion molding methods, sheet molding methods, thermoforming methods, rotational molding methods, lamination molding methods, press molding methods and blow molding methods, and molding methods involving use of a hot runner method can also be used.

Of these methods, injection molding methods, such as injection molding methods, ultra-high speed injection molding methods and injection compression molding methods, sheet extrusion molding methods and heteromorphic extrusion molding methods are preferred.

As mentioned above, a molded article obtained from the resin composition of the present invention is a molded article having surface luminescence properties, has little scattering wavelength selectivity of incident light, can reduce surface luminescence color hue deterioration, and develops an excellent surface luminescence color hue. Fig. 1 is a photograph that shows the state of surface luminescence at the time of light incidence of and ordinary conventional molded article (on the left side of the photograph) and a molded article comprising the resin composition of the present invention (on the right side). In the photograph, LED light is shone from the bottom end face of the molded article (the lower part in the photograph). In the conventional example shown on the left side of Fig. 1, uniform luminescence disappears and yellowing increases as the distance from the light source increases, but the molded article of the example shown on the right side of Fig. 1 has the characteristics of having uniform surface luminescence as far as the edge on the opposite side from the light source and having little deterioration in surface luminescence.

In this type of molded article according to the present invention, it is possible to measure tristimulus values in an XYZ color system and preferably specify a color mixture ratio such as that below.

That is, the molded article is such that when light is incident from an LED light source disposed along a side surface of a molded article having a thickness of 3 mm, the absolute value of the difference $\Delta x$ of the color mixture ratio x of tristimulus values (XYZ), which are obtained by measuring at a measurement point close to an incident light part of the end face of the molded article and a point 50 mm away from the end face of the molded article, that is, the absolute value of (x[incident light part]-x[point 50 mm away from end face of molded article) is preferably less than 0.01, more

preferably less than 0.009, and further preferably less than 0.008.

In addition, the molded article is such that when light is incident from an LED light source disposed along a side surface of a molded article having a thickness of 3 mm, the absolute value of the difference Δy of the color mixture ratio y of tristimulus values (XYZ), which are obtained by measuring at a measurement point close to an incident light part of the end face of the molded article and a point 50 mm away from the end face of the molded article, that is, the absolute value of (y[incident light part]-y[point 50 mm away from end face of molded article) is preferably less than 0.01, more preferably less than 0.009, and further preferably less than 0.008.

In the molded article according to the present invention, it is particularly preferable for both Δx and Δy to satisfy the preferred values mentioned above.

Here, the color mixture ratios x and y can be determined by measuring tristimulus values in an XYZ color system (tristimulus color mixture amounts, X, Y, Z) and ratios (tristimulus color mixture ratios, x, y, z) using a luminance meter. Specifically, these color mixture ratios are determined through measurements with a luminance meter, and details are as described in the examples section.

Moreover, measuring color mixture ratios at a position in contact with an LED light source, that is, at a position of 0 mm, is difficult due to the nature of the equipment, and measurements are therefore carried out close to an incident light part. Here, "close to an incident light part" means a part at any distance of up to 10 mm, and preferably up to 8 mm, in a direction away from a side end face of the molded article having a side surface in contact with the LED light source. Specifically, it is preferable for measurements to be carried out at a position 8 mm from a side end face of the molded article having a side surface in contact with the LED light source.

The haze value of a molded article which has a thickness of 3 mm and is formed using the thermoplastic resin composition of the present invention is preferably 0.5 to 20%, and more preferably 1 to 20%. If the haze value exceeds 20%, transparency decreases, and the surface luminescence brightness of the present invention significantly decreases as the distance from the LED light source increases, which is not desirable.

The shape of the molded article obtained by molding the thermoplastic resin composition of the present invention is not limited, and may be a planar shape, a non-planar shape having a curved form or the like, or a complex shape comprising a combination of a planar surface and a non-planar surface, such as dome-shaped, hemispherical, cylindrical, pyramidal or corrugated.

Preferred examples of molded bodies obtained by molding the resin composition of the present invention include optical members obtained using LEDs or the like as light sources. Such molded bodies can typically be broadly used as members for surface light emission (surface light-emitting bodies), such as light guide plates, light guide members, surface light-emitting molded members and lighting members. More preferred examples thereof include surface light-emitting molded bodies for edge light systems in which an LED light source is provided at an edge part of the molded article. In a surface light-emitting molded body, light emitted by the LED light source is incident from a side part of a planar molded article, the incident light is diffused by the spherical fine particles (B) with no scattering wavelength selectivity, and surface light emission occurs perpendicular to the angle of incidence, that is, the surface of the molded article serves as an emission surface.

For example, the surface light-emitting molded body can also be advantageously used as a vehicle interior lighting member (cabin or trunk) or display member.

In addition, the surface light-emitting molded body can also be advantageously used as a light-diffusing member in a variety of display devices, lighting devices, and the like by utilizing the uniform light-diffusing properties of the molded article of the present invention without directly shining a light source such as an LED into the inner part of the molded article.

Examples thereof include members for screens such as transmission type screens and reflection type screens, and it is possible to view images projected onto the molded article of the present invention. The surface light-emitting molded body can also be used as a heads up display (for example, in a vehicle or an aircraft).

In addition, it is possible to obtain a light feature having high aesthetic properties, such as one which is transparent when not lit and white or the like when lit, by using the surface light-emitting molded body at the periphery of a vehicle lamp (a headlamp, a tail lamp, or the like) or in a light guide.

In addition, regardless of whether or not light is directly guided into the inner part of a molded article, examples of applications of the molded article include components of covers, lenses and lens covers for a variety of optical members and lighting devices, light covers for other types of lighting fixtures, illuminated signs, transmission type screens, a variety of displays, electrical/electronic equipment, laptops, mobile devices such as cell phones and wearable devices, entertainment equipment such as pachinko (Japanese pinball) machines, slot machines in pachinko parlors and gaming machines, office automation equipment, information terminals, mechanical components, domestic appliances, vehicle members (lights, interior components and panels), home interiors (for example, highly aesthetic lighting members and information displays in shops), transparent partitions, panel components for product displays and the like (for example, show cases), partitioning plates for automatic vending machines, ticket machines, and the like, road signs, signboards, clocks and accessories. The molded article can be advantageously used in lighting/display members and light guide members for vehicle interiors, light guide members for vehicle lighting systems, and the like.

[Examples]

The present invention will now be explained in greater detail through the use of examples. However, it should be understood that the present invention is not limited to the examples given below.

Moreover, in the explanations given below, "parts" means "parts by mass".

Components used in the examples and comparative examples are as shown in Table 1 below.

[Table 1]

| Component | Symbol | |
|---|---|---|
| Thermoplastic resin (A) | A1 | Substantially straight chain aromatic polycarbonate resin produced by interfacial polymerization using bisphenol A as starting material. Refractive index: 1.59, Viscosity average molecular weight: 22,000, Structural viscosity index: 1.0. Branching amount: 0 mol% |
| | A2 | Substantially straight chain aromatic polycarbonate resin produced by interfacial polymerization using bisphenol A as starting material. Refractive index: 1.59,Viscosity average molecular weight: 16,000, Structural viscosity index: 1.0. Branching amount: 0 mol% |
| | A3 | Aromatic polycarbonate resin produced using interfacial polymerization method disclosed in Example 1 (PC-1) in WO2011/132510. Refractive index: 1.59, Viscosity average molecular weight: 64,000, Structural viscosity index: not measurable due to viscosity being too high, Branching amount: 0 mol% |
| | A4 | Branched chain aromatic polycarbonate resin produced by solution polymerization using bisphenol A as starting material.. Refractive index: 1.59, Viscosity average molecular weight: 28,000, Structural viscosity index 1.6. Branching amount: 0.7 mol% |
| | A5 | Aromatic polycarbonate resin produced using interfacial polymerization method using bisphenol A as starting material and blending 0.3 mol% of tris(hydroxyphenyl) ethane. Refractive index: 1.59, Viscosity average molecular weight: 26,000, Structural viscosity index: 1.4. Branching amount: 0.3 mol% |
| | A6 | Poly(methyl methacrylate) resin Acrypet VH-001 produced by Mitsubishi Chemical Corporation Mass average molecular weight: 60.000. refractive index: 1.49 |
| Spherical particles (B) | B1 | Titanium oxide: JR-1000 from Tayca Corporation, Average particle diameter: 1000 nm. Refractive index: 2.72 |
| | B2 | Titanium oxide: MP-70 from Tayca Corporation, Average particle diameter: 700 nm. Refractive index: 2.72 |
| | B3 | Zinc oxide: LPZINC-2-KS from Sakai Chemical Industry. Average particle diameter: 2000 nm. Refractive index: 2.0 |
| Spherical particles (BX) other than (B) | BX1 | Titanium oxide: JR-302S from Tayca Corporation, Average particle diameter: 350 nm. Refractive index: 2.72 |
| | BX2 | Titanium oxide: SR-1 fromy Tayca Corporation, Average particle diameter: 260 nm. Refractive index: 2.72 |
| | BX3 | Titanium oxide: PFC-310 from Ishihara Sangyo, Average particle diameter: 200 nm. Refractive index: 2.72 |
| Aromatic compound | C | Benzyl alcohol Benzyl Alcohol S from Tokyo Ohka Kogyo. |
| Polyalkylene glycol | D | Polybutylene glycol-containing polymer $HO-(CH(C_2H_5)CH_2O)_n-CH(CH_3)CH_2O-(CH(C_2H_5)CH_2O)_m-H$ Uniol PB-500 from NOF Corp. Number average molecular weight: 500 |
| Epoxy compound | E | 3,4-epoxycyclohexylmethyl-3',4'-epoxycyclohexane carboxylate Celloxide 2021P from Daicel Corporation |
| Flame retardant | G | Potassium perfluorobutane sulfonate Bavowet C4 from Lanxess |

(continued)

| Component | Symbol | |
|---|---|---|
| Ultraviolet absorber | H | 2-(2-hydroxy-5-(1,1,3,3-tetramethylbutyl)phenyl)benzotriazole Seesorb 709 from Shipro Kasei. |
| Stabilizer | J | Tris(2,4-di-tert-butylphenyl) phosphite Adekastab 2112 produced bv ADEKA |
| Mold-release agent | K1 | Pentaerythritol tetrastearate VPG861 produced bv Emery Oleochemicals |
| | K2 | Stearyl stearate Unistar M-9676 produced bv NOF Corp. |
| Coloring material | L1 | Solvent Blue 97 Macrolex Blue RR produced bv Lanxess |
| | L2 | Solvent Violet 36 Macrolex Violet 3R produced bv Lanxess |

(Examples 1 to 29 and Comparative Examples 1 to 10) [Production of resin pellets]

Components shown in Table 1 were blended at proportions (parts by mass) shown in Table 2, mixed for 20 minutes using a tumbler mixer, supplied to a "VS40-32V" single screw extruder produced by Tanabe Plastics Machinery Co., Ltd, kneaded at a screw rotation speed of 100 rpm, a discharge rate of 25 kg/hr and a barrel temperature of 280°C, and extruded in the form of a strand from the tip of an extrusion nozzle. The extruded product was rapidly cooled in a water bath, and then cut and pelletized using a pelletizer to obtain pellets of the polycarbonate resin composition.

[Formation of test piece]

Pellets obtained using the method described above were dried for 4 hours at a temperature of 120°C using a hot air circulation type dryer, after which a planar plate having a length of 111 mm, a width of 36 mm and a thickness of 3 mm was formed using a "SE-50DUZ" injection molding machine produced by Sumitomo Heavy Industries, Ltd., at a cylinder temperature of 280°C and a die temperature of 80°C.

[Haze (3 mmt; units: %)]

The planar plate (thickness 3 mm) obtained using the method described above was measured in terms of haze (units: %) at a 10° field of view with a D65 light source using a turbidimeter ("NDH-2000" produced by Nippon Denshoku Industries Co., Ltd.) in accordance with JIS K7136 and JIS K7361.

[Average brightness of flat surface (units: $cd/cm^2$)] A white LED light source (a 3 mm shell type white LED "OSW54K3131A" produced by OptoSupply) was brought into contact with a side surface of a long side of the planar plate described above, and when LED light was shone on to the planar plate, the brightness at 25 measurement points distributed in a 5×5 grid across the whole luminescent surface of the planar plate was measured using a luminance meter ("CA-2500" produced by Konica Minolta) disposed at a position 30 cm above the luminescent surface. The average brightness was calculated from the values measured at the 25 measurement points.

[Δx and Δy]

As shown in Fig. 2, a white LED light source (a 3 mm shell type white LED "OSW54K3131A" produced by OptoSupply) was brought into contact with a side surface of a long side of the planar plate described above, and when LED light was shone on to the planar plate, brightness was measured at a measurement point P1, which is at a distance of 8 mm from the end face of the planar plate in contact with the LED light source and is on a center line 18 mm from the long side of the plate, and a measurement point P2, which is 42 mm from the aforementioned measurement point on the center line of the long side of the planar plate (that is, a point 50 mm from the end face of the planar plate in contact with the LED light source), using a luminance meter ("CA-2500" produced by Konica Minolta) disposed at a position 30 cm above the luminescent surface, tristimulus values (X, Y and Z) for emitted colors and color mixture ratios (x and y) were obtained, and color mixture ratio differences (Δx and Δy) were determined.

Put simply, a low Δx value means little change in red component (or blue component) and, in simple terms, a low Δy value means little change in green component (or blue component), and scattering wavelength selectivity of light is low, and surface luminescence color hue deterioration can be reduced.

Δx and Δy were evaluated using the following three ranks, i.e., A, B, and C, with A being best.

<Appraisal of Δx>

A: Less than 0.01
B: At least 0.01 but less than 0.025
C: At least 0.025

<Appraisal of Δy>

A: Less than 0.01
B: At least 0.01 but less than 0.025
C: At least 0.025

It is particularly preferably for both Δx and Δy to be appraised as A.

Planar plates measuring 100×150×2 mm were obtained by drying pellets obtained in Example 2 and Comparative Example 5 for 4 hours at 120°C using a hot air circulation type dryer, and then injection molding the dried pellets using a "FANUC ROBOSHOT S-2000i 150B" injection molding machine produced by Fanuc Corporation at a cylinder temperature of 280°C and a die temperature of 80°C. An LED light source was brought into contact with the lower side of this planar plate, and LED light was shone from the lower side, as shown in Fig. 1. Fig. 1 shows a photograph of the state of luminescence (the left side shows Example 2 and the right side shows Comparative Example 5).

The results of these evaluations are shown in Table 2 onwards.

[Table 2]

| | | | Example | | | | | | | | |
|---|---|---|---|---|---|---|---|---|---|---|---|
| | | | 1 | 2 | 3 | 4 | 5 | 6 | 7 | 8 | 9 |
| Thermoplastic resin (A) | A1 | Parts | 100 | 100 | 100 | 100 | | | | | |
| | A2 | Parts | | | | | 80 | 80 | 20 | 20 | |
| | A3 | Parts | | | | | 20 | 20 | | | |
| | A4 | Parts | | | | | | | 80 | | |
| | A5 | Parts | | | | | | | | 80 | |
| | A6 | Parts | | | | | | | | | 100 |
| Spherical particles (B) | B1 | Parts | 0.0005 | 0.0010 | 0.0010 | 0.0010 | 0.0010 | 0.0010 | 0.0010 | 0.0010 | 0.0010 |
| | B2 | Parts | | | | | | | | | |
| Spherical particles (BX) other than (B) | BX1 | Parts | | | | | | | | | |
| | BX2 | Parts | | | | | | | | | |
| | BX3 | Parts | | | | | | | | | |
| Polyalkyleneglycol | D | Parts | | | | | | | | | |
| Epoxy compound | E | Parts | | | | | | | | | |
| Flame retardant | G | Parts | | | | | 0.08 | 0.08 | 0.08 | 0.08 | |
| UV absorber | H | Parts | | | | 0.3 | | 0.3 | 0.3 | 0.3 | |
| Stabilizer | J | Parts | 0.03 | 0.03 | 0.03 | 0.03 | 0.03 | 0.03 | 0.03 | 0.03 | 0.03 |
| Mold-release agent | K1 | Parts | 0.3 | 0.3 | 0.3 | 0.3 | 0.3 | 0.3 | 0.3 | 0.3 | 0.3 |
| | K2 | Parts | 0.1 | 0.1 | 0.1 | 0.1 | 0.1 | 0.1 | 0.1 | 0.1 | 0.1 |
| Coloring material | L1 | ppm | | | 0.04 | | | | | | |
| | L2 | ppm | | | 0.04 | | | | | | |
| Difference in refractive index between spherical particles and resin (A) | | | 1.13 | 1.13 | 1.13 | 1.13 | 1.13 | 1.13 | 1.13 | 1.13 | 1.23 |
| Haze (3 mmt, %) | | | 2.1 | 3.7 | 3.8 | 3.7 | 4.0 | 4.2 | 4.3 | 4.2 | 8.2 |
| Average brightness (cd/$cm^2$) of flat surface | | | 20 | 70 | 60 | 70 | 70 | 60 | 60 | 60 | 80 |
| Δ x of luminescence color | | | 0.0054 | 0.0072 | 0.0054 | 0.0068 | 0.0074 | 0.0066 | 0.0078 | 0.0062 | 0.0078 |

(continued)

| | Example | | | | | | | | |
|---|---|---|---|---|---|---|---|---|---|
| | 1 | 2 | 3 | 4 | 5 | 6 | 7 | 8 | 9 |
| Appraisal of $\Delta x$<br>A: Less than 0.01<br>B: At least 0.01 but less than 0.025<br>C: At least 0.025 | A | A | A | A | A | A | A | A | A |
| $\Delta$ y of luminescence color | 0.0095 | 0.0090 | 0.0058 | 0.0072 | 0.0088 | 0.0080 | 0.0082 | 0.0065 | 0.0095 |
| Appraisal of $\Delta$ y<br>A: Less than 0.01<br>B: At least 0.01 but less than 0.025<br>C: At least 0.025 | A | A | A | A | A | A | A | A | A |

[Table 3]

| | | | Example | | | | | | | | |
|---|---|---|---|---|---|---|---|---|---|---|---|
| | | | 10 | 11 | 12 | 13 | 14 | 15 | 16 | 17 | 18 |
| Thermoplastic resin (A) | A1 | Parts | 100 | 100 | 100 | 100 | 100 | 100 | 100 | 100 | 100 |
| | A2 | Parts | | | | | | | | | |
| | A3 | Parts | | | | | | | | | |
| | A4 | Parts | | | | | | | | | |
| | A5 | Parts | | | | | | | | | |
| | A6 | Parts | | | | | | | | | |
| Spherical particles (B) | B1 | Parts | 0.0020 | 0.0030 | 0.0040 | 0.0050 | | | | 0.0018 | 0.0018 |
| | B2 | Parts | | | | | 0.0010 | 0.0020 | 0.0030 | 0.0002 | |
| Spherical particles (BX) other than (B) | BX1 | Parts | | | | | | | | | 0.0002 |
| | BX2 | Parts | | | | | | | | | |
| | BX3 | Parts | | | | | | | | | |
| Polyalkylene glycol | D | Parts | | | | | | | | | |
| Epoxy compound | E | Parts | | | | | | | | | |
| Flame retardant | G | Parts | | | | | | | | | |
| UV absorber | H | Parts | | | | | | | | | |
| Stabilizer | J | Parts | 0.03 | 0.03 | 0.03 | 0.03 | 0.03 | 0.03 | 0.03 | 0.03 | 0.03 |
| Mold-release agent | K1 | Parts | 0.3 | 0.3 | 0.3 | 0.3 | 0.3 | 0.3 | 0.3 | 0.3 | 0.3 |
| | K2 | Parts | 0.1 | 0.1 | 0.1 | 0.1 | 0.1 | 0.1 | 0.1 | 0.1 | 0.1 |
| Coloring material | L1 | ppm | | | | | | | | | |
| | L2 | ppm | | | | | | | | | |
| Difference in refractive index between spherical particles and resin (A) | | | 1.13 | 1.13 | 1.13 | 1.13 | 1.13 | 1.13 | 1.13 | 1.13 | 1.13 |
| Haze (3 mmt, %) | | | 7.0 | 10.2 | 13.2 | 16.0 | 6.4 | 12.1 | 17.9 | 7.6 | 7.7 |
| Average brightness ($cd/cm^2$) of flat surface | | | 180 | 340 | 470 | 640 | 140 | 370 | 670 | 240 | 220 |
| Δ x of luminescence color | | | 0.0028 | 0.0006 | 0.0015 | 0.0030 | 0.0027 | 0.0020 | 0.0020 | 0.0012 | 0.0024 |

(continued)

| | Example | | | | | | | | |
|---|---|---|---|---|---|---|---|---|---|
| | 10 | 11 | 12 | 13 | 14 | 15 | 16 | 17 | 18 |
| Appraisal of Δ x<br>A: Less than 0.01<br>B: At least 0.01 but less than 0.025<br>C: At least 0.025 | A | A | A | A | A | A | A | A | A |
| Δ y of luminescence color | 0.0082 | 0.0076 | 0.0045 | 0.0025 | 0.0070 | 0.0066 | 0.0056 | 0.0064 | 0.0073 |
| Appraisal of Δ y<br>A: Less than 0.01<br>B: At least 0.01 but less than 0.025<br>C: At least 0.025 | A | A | A | A | A | A | A | A | A |

[Table 4]

| | | | Comparative Example | | | | | | |
|---|---|---|---|---|---|---|---|---|---|
| | | | 1 | 2 | 3 | 4 | 5 | 6 | 7 |
| Thermoplastic resin (A) | A1 | Parts | 100 | 100 | 100 | 100 | 100 | 100 | |
| | A2 | Parts | | | | | | | |
| | A3 | Parts | | | | | | | |
| | A4 | Parts | | | | | | | |
| | A5 | Parts | | | | | | | |
| | A6 | Parts | | | | | | | 100 |
| Spherical particles (B) | B1 | Parts | | | | | | | |
| | B2 | Parts | | | | | | | |
| Spherical particles (BX) other than (B) | BX1 | Parts | 0.0010 | 0.0030 | | | | | |
| | BX2 | Parts | | | 0.0010 | 0.0030 | | | |
| | BX3 | Parts | | | | | 0.0010 | 0.0030 | 0.0010 |
| Polyalkylene glycol | D | Parts | | | | | | | |
| Epoxy compound | E | Parts | | | | | | | |
| Flame retardant | G | Parts | | | | | | | |
| UV absorber | H | Parts | | | | | | | |
| Stabilizer | J | Parts | 0.03 | 0.03 | 0.03 | 0.03 | 0.03 | 0.03 | 0.03 |
| Mold-release agent | K1 | Parts | 0.3 | 0.3 | 0.3 | 0.3 | 0.3 | 0.3 | 0.3 |
| | K2 | Parts | 0.1 | 0.1 | 0.1 | 0.1 | 0.1 | 0.1 | 0.1 |
| Coloring material | L1 | ppm | | | | | | | |
| | L2 | ppm | | | | | | | |
| Difference in refractive index between spherical particles and resin (A) | | | 1.13 | 1.13 | 1.13 | 1.13 | 1.13 | 1.13 | 1.23 |
| Haze (3 mmt, %) | | | 8.1 | 22.8 | 8.8 | 23.1 | 7.7 | 21.1 | 8.2 |
| Average brightness (cd/cm$^2$) of flat surface | | | 220 | 978 | 230 | 1025 | 340 | 1300 | 390 |
| Δ x of luminescence color | | | 0.0065 | 0.0014 | 0.0124 | 0.0262 | 0.0303 | 0.0839 | 0.0327 |
| Appraisal of Δ x<br>A: Less than 0.01<br>B: At least 0.01 but less than 0.025<br>C: At least 0.025 | | | A | B | B | C | C | C | C |
| Δ y of luminescence color | | | 0.0104 | 0.0017 | 0.0190 | 0.0305 | 0.0412 | 0.1005 | 0.1005 |
| Appraisal of Δ y<br>A: Less than 0.01<br>B: At least 0.01 but less than 0.025<br>C: At least 0.025 | | | B | B | B | C | C | C | C |

[Table 5]

| | | | Example | | | | | | | Comparative Example | | |
|---|---|---|---|---|---|---|---|---|---|---|---|---|
| | | | 19 | 20 | 21 | 22 | 23 | 24 | 25 | 8 | 9 | 10 |
| Thermoplastic resin (A) | A1 | Parts | 60 | 60 | 60 | 60 | 60 | 60 | 60 | 60 | 60 | 60 |
| | A2 | Parts | 40 | 40 | 40 | 40 | 40 | 40 | 40 | 40 | 40 | 40 |
| | A3 | Parts | | | | | | | | | | |
| | A4 | Parts | | | | | | | | | | |
| | A5 | Parts | | | | | | | | | | |
| | A6 | Parts | | | | | | | | | | |
| Spherical particles (B) | B1 | Parts | 0.0010 | 0.0020 | 0.0030 | 0.0040 | | | | | | |
| | B2 | Parts | | | | | 0.0010 | 0.0020 | 0.0030 | | | |
| Spherical particles (BX) other than (B) | BX1 | Parts | | | | | | | | 0.0010 | 0.0020 | 0.0030 |
| | BX2 | Parts | | | | | | | | | | |
| | BX3 | Parts | | | | | | | | | | |
| Polyalkylene glycol | D | Parts | 0.6 | 0.6 | 0.6 | 0.6 | 0.6 | 0.6 | 0.6 | 0.6 | 0.6 | 0.6 |
| Epoxy compound | E | Parts | 0.05 | 0.05 | 0.05 | 0.05 | 0.05 | 0.05 | 0.05 | 0.05 | 0.05 | 0.05 |
| Flame retardant | G | Parts | | | | | | | | | | |
| UV absorber | H | Parts | | | | | | | | | | |
| Stabilizer | J | Parts | 0.1 | 0.1 | 0.1 | 0.1 | 0.1 | 0.1 | 0.1 | 0.1 | 0.1 | 0.1 |
| Mold-release agent | K1 | Parts | | | | | | | | | | |
| | K2 | Parts | | | | | | | | | | |
| Coloring material | L1 | ppm | | | | | | | | | | |
| | L2 | ppm | | | | | | | | | | |
| Difference in refractive index between spherical particles and resin (A) | | | 1.13 | 1.13 | 1.13 | 1.13 | 1.13 | 1.13 | 1.13 | 1.13 | 1.13 | 1.13 |
| Haze (3 mmt, %) | | | 3.6 | 6.5 | 9.5 | 12.5 | 5.4 | 10.4 | 16.9 | 7.5 | 12.2 | 22.8 |
| Average brightness ($cd/cm^2$) of flat surface | | | 20 | 70 | 60 | 70 | 70 | 60 | 60 | 180 | 340 | 470 |
| $\Delta$ x of luminescence color | | | 0.0012 | 0.0027 | 0.0035 | 0.0055 | 0.0014 | 0.0031 | 0.0039 | 0.0028 | 0.0064 | 0.0119 |

(continued)

| | Example | | | | | | | Comparative Example | | |
|---|---|---|---|---|---|---|---|---|---|---|
| | 19 | 20 | 21 | 22 | 23 | 24 | 25 | 8 | 9 | 10 |
| Appraisal of Δ x<br>A: Less than 0.01<br>B: At least 0.01 but less than 0.025<br>C: At least 0.025 | A | A | A | A | A | A | A | A | A | B |
| Δ y of luminescence color | 0.0006 | 0.0018 | 0.0029 | 0.0047 | 0.0043 | 0.0058 | 0.0089 | 0.0082 | 0.0119 | 0.0193 |
| Appraisal of Δ y<br>A: Less than 0.01<br>B: At least 0.01 but less than 0.025<br>C: At least 0.025 | A | A | A | A | A | A | A | B | B | B |

[Table 6]

| | | | Example | | | |
|---|---|---|---|---|---|---|
| | | | 26 | 27 | 28 | 29 |
| Thermoplastic resin (A) | A1 | Parts | 60 | 60 | 60 | 100 |
| | A2 | Parts | 40 | 40 | 40 | |
| | A3 | Parts | | | | |
| | A4 | Parts | | | | |
| | A5 | Parts | | | | |
| | A6 | Parts | | | | |
| Spherical particles (B) | B1 | Parts | | | | 0.0010 |
| | B2 | | | | | |
| | B3 | Parts | 0.0020 | 0.0030 | 0.0040 | |
| Spherical particles (BX) other than (B) | BX1 | Parts | | | | |
| | BX2 | Parts | | | | |
| | BX3 | Parts | | | | |
| Aromatic compound | C | Parts | | | | 0.5 |
| Polyalkylene glycol | D | Parts | 0.6000 | 0.6000 | 0.6000 | |
| Epoxy compound | E | Parts | 0.05 | 0.05 | 0.05 | 0.05 |
| Flame retardant | G | Parts | | | | |
| UV absorber | H | Parts | | | | |
| Stabilizer | J | Parts | 0..1 | 0.1 | 0.1 | 0.03 |
| Mold-release agent | K1 | Parts | | | | 0.3 |
| | K2 | Parts | | | | 0.1 |
| Coloring material | L1 | ppm | | | | |
| | L2 | ppm | | | | |
| Difference in refractive index between spherical particles and resin (A) | | | 0.41 | 0.41 | 0.41 | 1.13 |
| Haze (3 mmt, %) | | | 6.1 | 7.7 | 9.8 | 3.5 |
| Average brightness ($cd/cm^2$) of flat surface | | | 79 | 106 | 149 | 72 |
| Δ x of luminescence color | | | 0.0035 | 0.0038 | 0.0070 | 0.0074 |
| Appraisal of Δ x<br>A: Less than 0.01<br>B: At least 0.01 but less than 0.025<br>C: At least 0.025 | | | A | A | A | A |
| Δ y of luminescence color | | | 0.0007 | 0.0040 | 0.0028 | 0.0092 |
| Appraisal of Δ y<br>A: Less than 0.01<br>B: At least 0.01 but less than 0.025<br>C: At least 0.025 | | | A | A | A | A |

From the tables above, it can be understood that the examples had extremely low scattering wavelength selectivity of incident light and could reduce surface luminescence color hue deterioration.

[Industrial Applicability]

The thermoplastic resin composition of the present invention can be widely and advantageously used in a variety of optical members in which LEDs are used as light sources, and exhibit extremely high industrial applicability.

## Claims

1. A thermoplastic resin composition comprising 0.0001 to 0.09 parts by mass of spherical fine particles (B) having an average particle diameter of 500 to 2500 nm relative to 100 parts by mass of a transparent thermoplastic resin (A).

2. The thermoplastic resin composition of claim 1, wherein the transparent thermoplastic resin (A) is a polycarbonate resin or an acrylic resin.

3. The thermoplastic resin composition of claim 1 or claim 2, wherein a difference in refractive index between the spherical fine particles (B) and the transparent thermoplastic resin (A) is 0.3 or more.

4. The thermoplastic resin composition of any of claims 1 to 3, wherein the spherical fine particles (B) are titanium oxide, zinc oxide or zirconium oxide.

5. A molded article comprising the thermoplastic resin composition of any of claims 1 to 4.

6. The molded article of claim 5, which is a surface light-emitting body.

7. The molded article of claim 5 or claim 6, wherein when light is incident from an LED light source disposed along a side surface of a molded article having a thickness of 3 mm, an absolute value of a difference $\Delta x$ of a color mixture ratio x of tristimulus values (XYZ), which are obtained by measuring at a measurement point close to an incident light part of an end face of the molded article and a point 50 mm away from the end face of the molded article, is less than 0.01.

8. The molded article of claim 5 or claim 6, wherein when light is incident from an LED light source disposed along a side surface of a molded article having a thickness of 3 mm, an absolute value of a difference $\Delta y$ of a color mixture ratio y of tristimulus values (XYZ), which are obtained by measuring at a measurement point close to an incident light part of an end face of the molded article and a point 50 mm away from the end face of the molded article, is less than 0.01.

9. The molded article of claim 5 or claim 6, which has a haze value of 0.5 to 20% when measured at a thickness of 3 mm.

10. The molded article of any of claims 5 to 9, which is a molded body for an edge light system.

11. The molded article of any of claims 5 to 9, which is a molded body for image projection.

12. The molded article of any of claims 5 to 9, which is a light guide member.

13. The molded article of any of claims 5 to 9, which is a member for a display.

14. The molded article of any of claims 5 to 9, which is a member for a motor vehicle lamp instrument.

[Fig. 1]

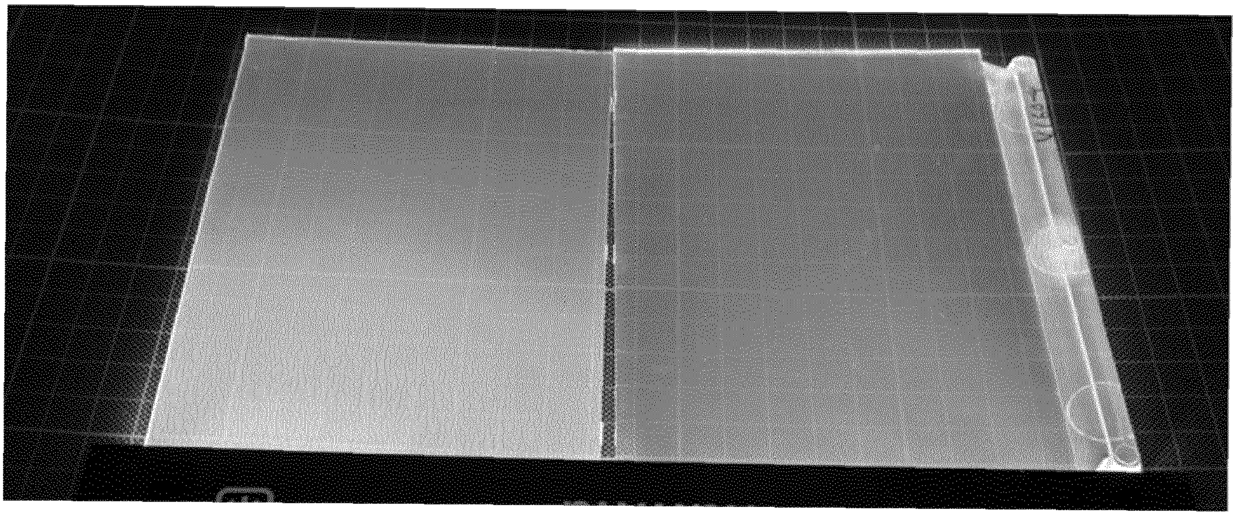

[Fig. 2]

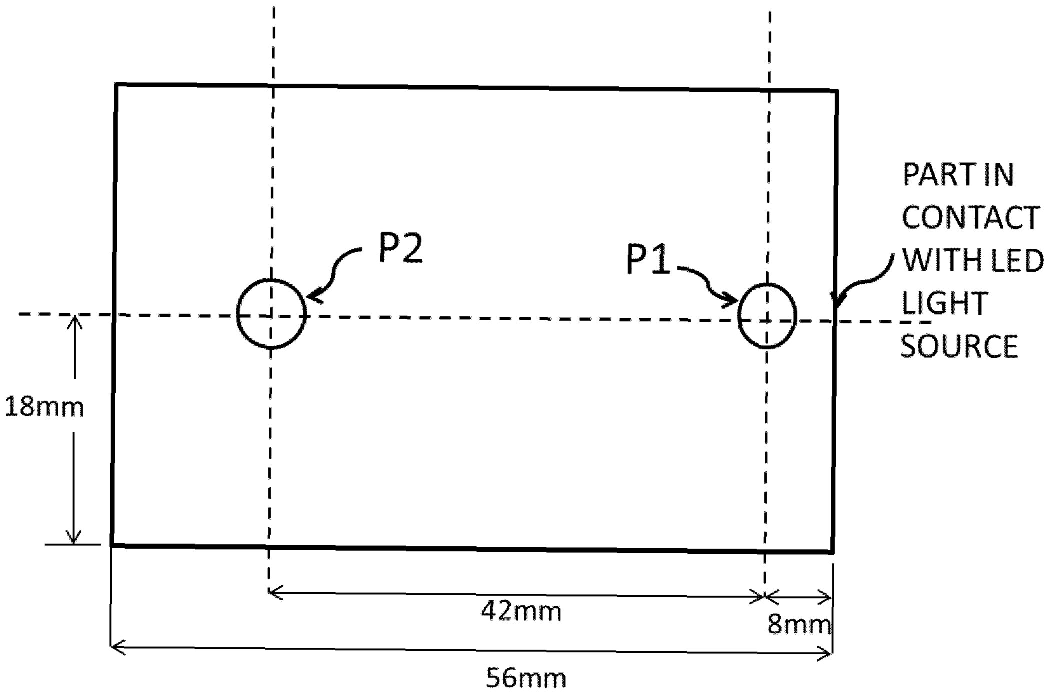
P2
P1
PART IN CONTACT WITH LED LIGHT SOURCE
18mm
42mm
8mm
56mm

**INTERNATIONAL SEARCH REPORT**

International application No.
PCT/JP2020/027682

A. CLASSIFICATION OF SUBJECT MATTER
C08K 7/18(2006.01)i; C08L 101/12(2006.01)i
FI: C08L101/12; C08K7/18
According to International Patent Classification (IPC) or to both national classification and IPC

B. FIELDS SEARCHED
Minimum documentation searched (classification system followed by classification symbols)
C08K7/18; C08L101/12

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2010/113422 A1 (KURARAY CO., LTD.) 07.10.2010 (2010-10-07) claims, paragraph [0057], examples 1, 2, paragraph [0070] | 1-14<br>4-14 |
| X<br>Y<br>A | WO 2015/125690 A1 (KURARAY CO., LTD.) 27.08.2015 (2015-08-27) claims, examples 1-9, 13-16 | 1, 3-14<br>4-14<br>2 |
| Y | WO 2014/097901 A1 (KONICA MINOLTA, INC.) 26.06.2014 (2014-06-26) claims, paragraph [0156] | 4-14 |
| X | JP 2013-197024 A (KURARAY CO., LTD.) 30.09.2013 (2013-09-30) claim 1, paragraphs [0001], [0011], example 1 | 1-9 |
| X | JP 2012-134022 A (KURARAY CO., LTD.) 12.07.2012 (2012-07-12) claims 1-3, reference examples 1, 2 | 1-13 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 September 2020 (29.09.2020) | 06 October 2020 (06.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/027682

C (Continuation). DOCUMENTS CONSIDERED TO BE RELEVANT

| Category* | Citation of document, with indication, where appropriate, of the relevant passages | Relevant to claim No. |
|---|---|---|
| E, X<br>E, A | JP 2020-132666 A (MITSUBISHI ENGINEERING-PLASTICS CORPORATION) 31.08.2020 (2020-08-31) claims, paragraph [0117], comparative examples 1, 2 | 1, 2, 5, 6, 10-14<br>3, 4, 7-9 |
| P, X<br>P, A | WO 2019/172243 A1 (MITSUBISHI CHEMICAL CORPORATION) 12.09.2019 (2019-09-12) claims, comparative examples 19, 20, 23, 24 | 1, 2, 5, 6, 9, 10, 12-14<br>3, 4, 7, 8, 11 |
| E, A | JP 2020-117705 A (MITSUBISHI ENGINEERING-PLASTICS CORPORATION) 06.08.2020 (2020-08-06) claims, examples | 1-4 |

Form PCT/ISA/210 (continuation of second sheet) (January 2015)

**INTERNATIONAL SEARCH REPORT**
Information on patent family members

International application No.
PCT/JP2020/027682

| Patent Documents referred in the Report | Publication Date | Patent Family | Publication Date |
|---|---|---|---|
| WO 2010/113422 A1 | 07 Oct. 2010 | US 2012/0008338 A1<br>claims, examples<br>CN 102428315 A<br>KR 10-2012-0022834 A | |
| WO 2015/125690 A1 | 27 Aug. 2015 | US 2017/0043557 A1<br>claims, examples<br>EP 3109213 A1 | |
| WO 2014/097901 A1 | 26 Jun. 2014 | US 2015/0340641 A1<br>claims, paragraph [0180] | |
| JP 2013-197024 A | 30 Sep. 2013 | (Family: none) | |
| JP 2012-134022 A | 12 Jul. 2012 | (Family: none) | |
| JP 2020-132666 A | 31 Aug. 2020 | (Family: none) | |
| WO 2019/172243 A1 | 12 Sep. 2019 | CN 110476009 A<br>claims, examples | |
| JP 2020-117705 A | 06 Aug. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H03143950 A
- JP H0632973 A
- JP H05341284 A
- JP 2005232442 A
- JP H08259687 A
- JP H08245782 A
- JP 2016125038 A
- WO 2011132510 A


### Non-patent literature cited in the description


- *Macromol. Chem.,* 1965, vol. 88, 215